# EUROPEAN PATENT APPLICATION

(11) **EP 1 829 936 A1**
(43) Date of publication of application: **05.09.2007**
(21) Application number: 05806160.7
(22) Date of filing: 09.11.2005
(51) Int. Cl.: C09D 11/00, B41J 2/01, B41M 5/00, C08G 59/24, C08G 59/68, C08G 65/18

(54) **ACTIVE RAY-CURABLE COMPOSITION, ACTIVE RAY-CURABLE INK AND IMAGE-FORMING METHOD**

(30) Priority: 18.11.2004 JP 2004334394; 28.02.2005 JP 2005052752
(71) Applicant: Konica Minolta Medical & Graphic, Inc., Tokyo 163-0512 (JP)
(72) Inventor: WATANABE, Shinya Konica Minolta Med. & Graphic Inc, Tokyo 1630512 (JP)
(74) Representative: Henkel, Feiler & Hänzel
(86) International application number: PCT/JP2005/020503
(87) International publication number: WO 2006/054461

(57) **Abstract**

Disclosed is an actinic ray curable ink containing pigment, a photolytic acid generating agent and an epoxy compound represented by the following formula (1-1) or (1-2),

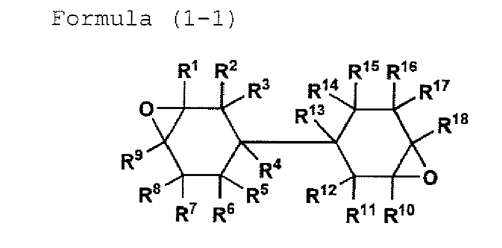

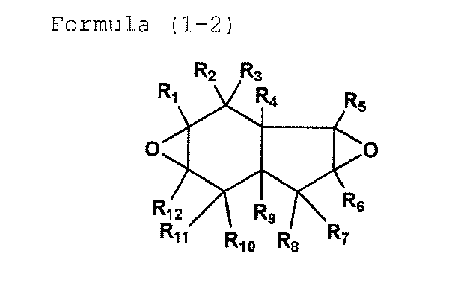

## Description

### FIELD OF THE INVENTION

The present invention relates to an actinic ray curable composition, an actinic ray curable ink, and an image formation method, and particular to an actinic ray curable composition and an actinic ray curable ink, which have low viscosity, high curing speed, curing property without being affected by environmental humidity, and high storage stability, and provide a cured layer having good adhesion to recording materials, high hardness, high flexibility, high light-fastness, and to an image formation layer employing the ink.

### TECHNICAL BACKGROUND

Heretofore, curable compositions which are cured by either actinic energy beams or heat have been put to practical use as paints for plastics, paper, woodwork, and inorganic materials, adhesives, printing inks, printing circuit substrates, and electric insulators. In recent years, enhancement of weather resistance as well as improvement of adhesion to recording material has further been desired particularly for printing inks, paints, and adhesives. As ink comprising the curable composition, there is an ultraviolet radiation curable ink which is cured by ultraviolet radiation. In recent years, ink-jet systems which employ the above ultraviolet radiation curable ink have attracted an increasing interest due to formation of relatively low unpleasant odors, rapid drying, and recording applicability to recording media which do not absorb ink (see for example Patent Document 1 or 2 described later). In this field, demanded are high strength and flexibility of formed ink layers, in addition to low viscosity. Inks for ink-jet containing a plasticizer is disclosed for providing plasticity (see for example, Patent Document 3 described later), which relate to melt type inks. However, there is no description therein of actinic ray durable inks for ink-jet employing solvent type inks.

The inks as disclosed above have problems in that the curing speed tends to fluctuate depending on processing environment or the types of recording materials.

Since ink employing radically polymerizable compounds (see for example Patent Documents 4 through 7 described below) is subjected to polymerization inhibition due to oxygen, when the volume of ink droplets is small, curing tends to be inhibited. On the other hand, ink employing cationically polymerizable compounds is not subjected to polymerization inhibition due to oxygen but has problems in that polymerization is adversely affected by the presence of moisture (humidity) at the molecular level. A cured layer, formed from these inks, is insufficient in hardness, flexibility or adhesion to recording materials, and is especially low in light fastness.
Patent Document 1:
   Japanese Patent O.P.I. Publication No. 6-200204
Patent Document 2:
   Japanese Patent O.P.I. Publication No. 2000-504778
Patent Document 3:
   Japanese Patent O.P.I. Publication No. 8-3493
Patent Document 4:
   Japanese Patent O.P.I. Publication No. 2001-220526
Patent Document 5:
   Japanese Patent O.P.I. Publication No. 2002-188025
Patent Document 6:
   Japanese Patent O.P.I. Publication No. 2002-317139
Patent Document 7:
   Japanese Patent O.P.I. Publication No. 2003-55449

### DISCLOSURE OF THE INVENTION

### PROBLEMS TO BE SOLVED BY THE INVENTION

In view of the foregoing, the present invention has been made. An object of the invention is to provide an actinic ray curable ink having low viscosity, high curing speed, curing property without being affected by environmental humidity and high storage stability; and providing a cured ink layer having good adhesion to recording materials, high hardness, high flexibility, and high light fastness.

### MEANS FOR SOLVING THE ABOVE PROBLEMS

The above object has been achieved by the following constitutions.
1. An actinic ray curable ink containing pigment, a photolytic acid generating agent and an epoxy compound represented by formula (1-1), 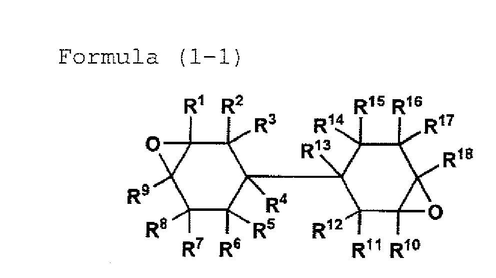 wherein R¹ through R¹⁸ independently represent a hydrogen atom, a halogen atom, a hydrocarbon group, a hydrocarbon group having a halogen atom or an oxygen atom, or a substituted or unsubstituted alkoxy group.
2. The actinic ray curable ink of item 1 above, further containing an epoxy compound represented by formula (2), 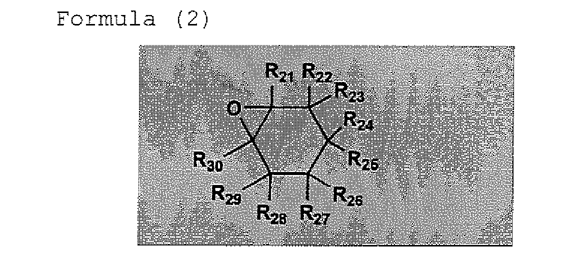 wherein R₂₁ through R₃₀ independently represent a hydrogen atom, a halogen atom, a hydrocarbon group, a hydrocarbon group having a halogen atom or an oxygen atom, or a substituted or unsubstituted alkoxy group.
3. The actinic ray curable ink of item 1 above, wherein the epoxy compound is bicyclohexyl-3,3'-diepoxide, bicyclohexyl-3,3'-dimethyl-3,3'-diepoxide, bicyclohexyl-4,4'-dimethyl-3,3'-diepoxide, or bicyclohexyl-3,4'-dimethyl-3,3'-diepoxide.
4. The actinic ray curable ink of item 1 above, wherein the photolytic acid generating agent is an onium salt.
5. The actinic ray curable ink of item 4 above, wherein the onium salt is a sulfonium salt.
6. The actinic ray curable ink of item 5 above, wherein the sulfonium salt is a compound represented by formula (I-1), 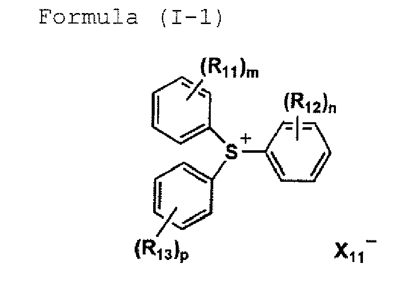 wherein R₁₁, R₁₂ and R₁₃ independently represent a substituent; m, n and p independently represent an integer of from 0 to 2; and X₁₁⁻ represents a counter anion.
7. The actinic ray curable ink of item 1 above, further containing an oxetane compound.
8. The actinic ray curable ink of item 1 above, further containing a basic compound.
9. The actinic ray curable ink of item 1 above, wherein the ink has a viscosity at 25 °C of from 7 to 40 mPa·s.
10. The actinic ray curable ink of item 1 above, wherein the ink has a water content of from 1.50 to 5.00% by weight, determined by a Karl Fischer titration method.
11. An actinic ray curable ink containing pigment, a photolytic acid generating agent and an epoxy compound represented by formula (1-2), 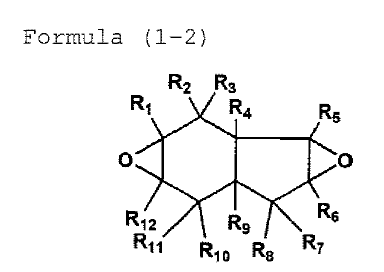 wherein R₁ through R₁₂ independently represent a hydrogen atom, a halogen atom, a hydrocarbon group, a hydrocarbon group having a halogen atom or an oxygen atom, or a substituted or unsubstituted alkoxy group.
12. The actinic ray curable ink of item 11 above, further containing an epoxy compound represented by formula (2) .
13. The actinic ray curable ink of item 11 above, wherein all of R₁ through R₁₂ in formula (1-2) are simultaneously hydrogen atoms.
14. The actinic ray curable ink of item 11 above, wherein in formula (1-2), either one of R₁ and R₁₂ is a methyl group, and either one of R₅ and R₆ is a methyl group.
15. The actinic ray curable ink of item 14 above, wherein in formula (1-2), one of R₁ and R₁₂ is a methyl group and the other is a hydrogen atom, and one of R₅ and R₆ is a methyl group and the other is a hydrogen atom.
16. The actinic ray curable ink of item 11 above, wherein the photolytic acid generating agent is an onium salt.
17. The actinic ray curable ink of item 14 above, wherein the onium salt is a sulfonium salt.
18. The actinic ray curable ink of item 17 above, wherein the sulfonium salt is a compound represented by formula (1-1).
19. The actinic ray curable ink of item 11 above, further containing an oxetane compound.
20. The actinic ray curable ink of item 11 above, further containing a basic compound.
21. The actinic ray curable ink of item 11 above, wherein the ink has a viscosity at 25 °C of from 7 to 40 mPa·s.
22. The actinic ray curable ink of item 11 above, wherein the ink has a water content of from 1.50 to 5.00% by weight, determined by a Karl Fischer titration method.
23. An actinic ray curable composition containing an epoxy compound represented by formula (1-1) and an epoxy compound represented by formula (2).
24. The actinic ray curable composition of item 23 above, wherein the epoxy compound represented by formula (1-1) is bicyclohexyl-3,3'-diepoxide, bicyclohexyl-3,3'-dimethyl-3,3'-diepoxide, bicyclohexyl-4,4'-dimethyl-3,3'-diepoxide, or bicyclohexyl-3,4'-dimethyl-3,3'-diepoxide.
25. The actinic ray curable composition of item 23 above, further containing a photolytic acid generating agent capable of generating an acid on light exposure.
26. The actinic ray curable composition of item 25 above, wherein the photolytic acid generating agent is an onium salt.
27. The actinic ray curable composition of item 26 above, wherein the onium salt is a sulfonium salt.
28. The actinic ray curable composition of item 27 above, wherein the sulfonium salt is a compound represented by formula (I-1).
29. The actinic ray curable composition of item 23 above, further containing an oxetane compound.
30. An actinic ray curable composition containing an epoxy compound represented by formula (1-2) and an epoxy compound represented by formula (2).
31. The actinic ray curable composition of item 30 above, wherein all of R₁ through R₁₂ in formula (1-2) are simultaneously hydrogen atoms.
32. The actinic ray curable composition of item 30 above, wherein in formula (1-2), either one of R₁ and R₁₂ is a methyl group, and either one of R₅ and R₆ is a methyl group.
33. The actinic ray curable composition of item 32 above, wherein one of R₁ and R₁₂ is a methyl group and the other is a hydrogen atom, and one of R₅ and R₆ is a methyl group and the other is a hydrogen atom.
34. The actinic ray curable composition of item 30 above, further containing a photolytic acid generating agent capable of generating an acid on light exposure.
35. The actinic ray curable composition of item 34 above, wherein the photolytic acid generating agent is an onium salt.
36. The actinic ray curable composition of item 35 above, wherein the onium salt is a sulfonium salt.
37. The actinic ray curable composition of item 36 above, wherein the sulfonium salt is a compound represented by formula (I-1).
38. The actinic ray curable composition of item 30 above, further containing an oxetane compound.
39. An image formation method comprising the steps of ejecting the actinic ray curable ink of item 1 above onto a recording medium to form an ink image, and exposing to actinic radiation to cure the resulting ink image.
40. An image formation method comprising the steps of ejecting the actinic ray curable ink of item 11 above onto a recording medium to form an ink image, and exposing to actinic radiation to cure the resulting ink image.

### EFFECTS OF THE INVENTION

The present invention can provide an actinic ray curable ink having low viscosity, high curing speed, curing property without being affected by environmental humidity and high storage stability; and providing a cured ink layer having good adhesion to recording materials, high hardness, high flexibility, and high light fastness.

### BRIEF DESCRIPTION OF THE DRAWINGS

Fig. 1 shows a front view of one embodiment of the main section of the ink-jet recording apparatus of the invention.
Fig. 2 shows a view of another embodiment of the main section of the ink-jet recording apparatus of the invention.

### PREFERRED EMBODIMENTS OF THE INVENTION

The preferred embodiments of the present invention will be detailed below, but the invention is not limited thereto.

The present invention will be explained below,

The epoxy compound in the invention represented by formula (1-1), (1-2) or (2) will be explained.

In formula (1-1), R¹ through R¹⁸ independently represent a hydrogen atom, a halogen atom, a hydrocarbon group, a hydrocarbon group having a halogen atom or an oxygen atom, or a substituted or unsubstituted alkoxy group, provided that they are the same or different. It is preferred that R¹ and R⁹ are not simultaneously hydrogens, and one of R¹ and R⁹ is an alkyl group (preferably a methyl group) and the other is hydrogen, in view of safety or stability of the actinic ray curable composition and actinic ray curable ink. Similarly, it is preferred that R¹⁰ and R¹⁸ are not simultaneously hydrogens, and one of R¹⁰ and R¹⁸ is an alkyl group (preferably a methyl group) and the other is hydrogen.

Typical examples of the epoxy compound represented by formula (1) include 1-1 bicyclohexyl-3,3'-diepoxide, 1-2 bicyclohexyl-3,3'-dimethyl-3,3'-diepoxide, 1-3 bicyclohexyl-4,4'-dimethyl-3,3'-diepoxide, or 1-4 bicyclohexyl-3,4'-dimethyl-3,3'-diepoxide

In formula (1-2), R₁ through R₁₂ independently represent a hydrogen atom, a halogen atom, a hydrocarbon group, a hydrocarbon group having a halogen atom or an oxygen atom, or a substituted or unsubstituted alkoxy group, provided that they may be the same or different. It is preferred that R₁ and R₁₂ are not simultaneously hydrogens, and one of R₁ and R₁₂ is an alkyl group (preferably a methyl group) and the other is hydrogen, in view of safety or stability of the actinic ray curable composition and actinic ray curable ink. Similarly, it is preferred that R₅ and R₆ are not simultaneously hydrogens, and one of R₅ and R₆ is an alkyl group (preferably a methyl group) and the other is hydrogen.

The epoxy compound represented by formula (1-1) or (1-2) can be synthesized according to the methods described in the following literatures:
JP-A 2004-182648; "Jiken Kagaku Koza 20, Yukigosei II", 213-(1992), Fourth Edition, published by Maruzen KK Shuppan; Ed. by Alfred Hasfner, "The chemistry of heterocyclic compounds-Small Ring Heterocycles part 3 Oxiranes", John and Wiley and
Sons, An Interscience Publication, New York (1985); Yoshimura, "Secchaku", Vol. 29, 12, pp. 32 (1985); Yoshimura, "Secchaku", Vol. 30, 5, pp. 42 (1986); and Yoshimura, "Secchaku", Vol. 30, 7, pp. 42 (1986)

In the invention, a combination of the epoxy compound represented by formula (1-1) or (1-2) with the epoxy compound represented by formula (2) is preferred in providing low viscosity and in forming a flexible cured layer. Further, addition of an oxetane compound is preferred in providing high speed curing, minimizing an affect by high humidity environment.

In formula (2), R₂₁ through R₃₀ independently represent a hydrogen atom, a halogen atom, a hydrocarbon group, a hydrocarbon group having a halogen atom or an oxygen atom, or a substituted or unsubstituted alkoxy group, provided that they may be the same or different. It is preferred that R₂₁ and R₃₀ are not simultaneously hydrogens, and one of R₂₁ and R₃₀ is an alkyl group (preferably a methyl group) and the other is hydrogen, in view of safety or stability of the actinic ray curable composition and actinic ray curable ink.

Next, the oxetane compound (hereinafter also referred to as oxetane ring-containing compound or oxetane compound) in the invention will be explained. The oxetane ring has a 4-menmer cyclic ether structure.

In the invention, an oxetane compound represented by formula (10) is preferred.

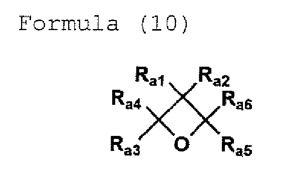

In formula (10), Rₐ₁ through Rₐ₆ independently represent a hydrogen atom, or a substituent, provided that all of Rₐ₁ through Rₐ₆ are not simultaneously hydrogens.

In formula (10), examples of the substituent represented by Rₐ₁ through Rₐ₆ include an alkyl group (e.g., methyl, ethyl, propyl, isopropyl, tert-butyl, pentyl, hexyl, octyl, dodecyl, tridecyl, tetradecyl, pentadecyl, a cyclopentyl, cyclohexyl), an alkenyl group (e.g., vinyl, 1-propenyl, 2-propenyl, 2-butenyl, allyl), an alkynyl group (e.g., acetylenyl, 1-propynyl, 2-propynyl, 2-butynyl, propargyl), an alkoxy group (e.g., methoxy, ethoxy, propyloxy, pentyloxy, hexyloxy, octyloxy, dodecyloxy), a cycloalkoxy group (e.g., cyclopentyloxy, cyclohexyloxy), an alkoxycarbonyl group (e.g., methyloxycarbonyl, ethyloxycarbonyl, butyloxycarbonyl, octyloxycarbonyl, dodecyloxycarbonyl), an acyloxy group (e.g., acetyloxy, ethylcarbonyloxy, butylcarbonyloxy, octylcarbonyloxy, dodecylcarbonyloxy, phenylcarbonyloxy), an aromatic hydrocarbon group (e.g., phenyl, naphthyl, anthracenyl), an aromatic heterocyclic group (e.g., furyl, thienyl, pyridyl, pyridazyl, pyrimidyl, pyrazyl, triazyl, imidazolyl, pyrazolyl, thiazolyl, benzoimidazolyl, benzoxazolyl, quinazolyl, phthalazyl, pyrrolyl, 2-quinolyl, 1-isoquinolyl), a heterocyclic group (e.g., pyrrolidyl, imidazolidyl, morpholyl group, oxazolidyl, 2-tetrahydrofuranyl, 2-tetrahydrothienyl, 2-tetrahydropyranyl, 3-tetrahydropyranyl), a halogen atom (e.g., chlorine atom, bromine atom, fluorine atom), a fluorohydrocarbon group (e.g., fluoromethyl, trifluoromethyl, pentafluoroethyl, pentafluorophenyl). Rₐ₁ and Rₐ₂ may combine with each other to form a ring, Rₐ₃ and Rₐ₄ may combine with each other to form a ring, or Rₐ₅ and Rₐ₆ may combine with each other to form a ring. The substituent represented by Rₐ₁ through Rₐ₆ is preferably an alkyl group, an alkoxy group, an acyloxy group, an alkoxycarbonyl group, an aromatic hydrocarbon group, an aromatic heterocyclic group, a halogen atom or a fluorohydrocarbon group.

The substituent represented by Rₐ₁ through Rₐ₆ has further a substituent.

Examples of a substituent for the substituent represented by Rₐ₁ through Rₐ₆ include an alkyl group (e.g., methyl, ethyl, propyl, isopropyl, tert-butyl, pentyl, hexyl, octyl, dodecyl, tridecyl, tetradecyl, pentadecyl, cyclopentyl, cyclohexyl), an alkenyl group (e.g., vinyl, 1-propenyl, 2-propenyl, 2-butenyl, allyl), an alkynyl group (e.g., acetylenyl, 1-propynyl, 2-propynyl, 2-butynyl, propargyl), an aromatic hydrocarbon group (e.g., phenyl, naphthyl, anthracenyl), an aromatic heterocyclic group (e.g., furyl, thienyl, pyridyl, pyridazyl, pyrimidyl, pyrazyl, triazyl, imidazolyl, pyrazolyl, thiazolyl, benzoimidazolyl, benzoxazolyl, quinazolyl, phthalazyl, pyrrolyl, 2-quinolyl, 1-isoquinolyl), a heterocyclic group (e.g., pyrrolidyl, imidazolidyl, morpholyl group, oxazolidyl, 2-tetrahydrofuranyl, 2-tetrahydrothienyl, 2-tetrahydropyranyl, 3-tetrahydropyranyl), an alkoxy group (e.g., methoxy, ethoxy, propyloxy, pentyloxy, hexyloxy, octyloxy, dodecyloxy, cyclopentyloxy, cyclohexyloxy), an aryloxy group (e.g., phenoxy, naphthyloxy), an alkylthio group (e.g., methylthio, ethylthio, propylthio, pentylthio, hexylthio, octylthio, dodecylthio, cyclopentylthio, cyclohexylthio), an arylthio group (e.g., phenylthio, naphthylthio), an alkoxycarbonyl group (e.g., methyloxycarbonyl, ethyloxycarbonyl, butyloxycarbonyl, octyloxycarbonyl, dodecyloxycarbonyl), an aryloxycarbonyl group (e.g., phenyloxycarbonyl, naphthyloxycarbonyl), a sulfamoyl group (e.g., aminosulfonyl, methylaminosulfonyl, dimethylaminosulfonyl, butylaminosulfonyl, hexylaminosufonyl, cyclohexylaminosulfonyl, octylaminosulfonyl, dodecylaminosulfonyl, phenylaminosulfonyl, naphthylaminosulfonyl, 2-pyridylaminosulfonyl), an acyl group (e.g., acetyl, ethylcarbonyl, propylcarbonyl, pentylcarbonyl, cyclohexylcarbonyl, octylcarbonyl, 2-ethylhexylcarbonyl, dodecylcarbonyl, phenylcarbonyl, naphthylcarbonyl, pyridylcarbonyl), an acyloxy group (e.g., acetyloxy, ethylcarbonyloxy, butylcarbonyloxy, octylcarbonyloxy, dodecylcarbonyloxy, phenylcarbonyloxy), an amido group (e.g., methylcarbonylamino, ethylcarbonylamino, dimethylcarbonylamino, propylcarbonylamino, pentylcarbonylamino, cyclohexylcarbonylamino, 2-ethylhexylcarbonylamino, octylcarbonylamino, dodecylcarbonylamino, phenylcarbonylamino, naphthylcarbonylamino), a carbamoyl group (e.g., aminocarbony, methylaminocarbonyl, dimethylaminocarbonyl, propylaminocarbonyl, pentylaminocarbonyl, cyclohexylaminocarbonyl, octylaminocarbonyl, 2-ethylhexylaminocarbonyl, dodecylaminocarbonyl, phenylaminocarbonyl, naphthylaminocarbonyl, 2-pyridylaminocarbonyl), a ureido group (e.g., methylureido, ethylureido, pentylureido, cyclohexylureido, octylureido, dodecylureido, phenylureido, naphthylureido, 2-pyridylureido), a sufinyl group (e.g., methylsulfinyl, ethylsulfinyl, butylsulfinyl, cyclohexylsulfinyl, 2-ethylhexylsulfinyl, dodecysulfinyl, phenylsufinyl, naphthylsulfinyl, 2-pyridylsulfiny), an alkylsulfonyl group (e.g., methylsulfonyl, ethylsulfonyl, butylsulfonyl, cyclohexylsulfonyl, 2-ethylhexylsulfonyl, dodecylsufonyl), an arylsulfonyl group (e.g., phenylsulfonyl, naphthylsulfonyl, 2-pyridylsulfonyl), an amino group (e.g., amino, ethylamino, dimethylamino, butylamino, cyclopentylamino, 2-ethylhexylamino, dodecylamino, anilino, naphthylamino, 2-pyridylamino), a halogen atom (e.g., fluorine atom, chlorine atom, bromine atom), a fluorohydrocarbon group (e.g., fluoromethyl, trifluoromethyl, pentafluoroethyl, pentafluorophenyl), a cyano group, a mercapto group, a silyl group (e.g., trimethylsilyl, triisopropylsilyl, triphenylsilyl, phenyldiethylsilyl), a hydroxyl group, a nitro group, and a carboxyl group. The foregoing substituents may have the substituent as denoted above in Rₐ₁ through Rₐ₆, and the plural substituents described above may combine with each other to form a ring.

The substituent for the substituent represented by Rₐ₁ through Rₐ₆ is preferably a halogen atom, an alkyl group, an alkoxy group, an acyloxy group, an alkoxycarbonyl group, an aromatic hydrocarbon group, an aromatic heterocyclic group, a hydroxyl group or a fluorohydrocarbon group.

In formula (10), one or more of the substituent represented by Rₐ₁ through Rₐ₆ may have, as a substituent, a group having the same structure as formula (10) to form a polyfunctional oxetane compound having two or more oxetane rings.

The oxetane compound in the invention preferably has a substituent at the 2- or 3-positin of the oxetane ring.

The substituent at the 2-positin of the oxetane ring is not specifically limited, but preferred examples thereof include an aromatic group. The aromatic group means an aromatic hydrocarbon group (e.g., phenyl, naphthyl, anthracenyl) or an aromatic heterocyclic group (e.g., furyl, thienyl, pyridyl, pyridazyl, pyrimidyl, pyrazyl, triazyl, imidazolyl, pyrazolyl, thiazolyl, benzoimidazolyl, benzoxazolyl, quinazolyl, phthalazyl, pyrrolyl, 2-quinolyl, 1-isoquinolyl), as described above. The aromatic group have further a substituent. Examples of the further substituent include a halogen atom, an alkyl group, an alkoxy group, an acyloxy group, or an alkoxycarbonyl group, as described above. When the substituent at the 2-position of the oxetane ring is an aromatic group, the oxetane compound may have a substituent at the 3-position of the oxetane ring. Examples of the substituent at the 3-position of the oxetane ring include an alkyl group or an alkoxy group, as described above.

The oxetane compound in the invention having a substituent at the 2-position of the oxetane ring is preferably an oxetane compound represented by the following formula (a) or (b). 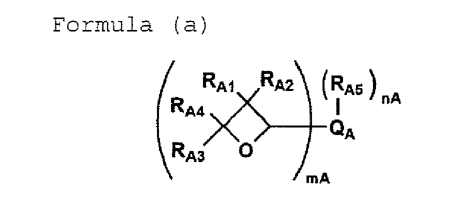 wherein Q_{A} represents a (mA+nA)-valent aromatic group; R_{A1} through R_{A4} independently represent a hydrogen atom or a substituent; R_{A5} represents a substituent; mA represents an integer of from 1 to 3; and nA represents an integer of from 0 to 5. The (mA+nA)-valent aromatic group represented by Q_{A} represents the same aromatic group as denoted above. The substituent represented by R_{A1} through R_{A4} represents the same as those as denoted in R₁ through R₆ above. R_{A1} through R_{A4} each are preferably a hydrogen atom, an alkyl group or an alkoxy group. The substituent represented by R_{A5} represents the same as those as denoted in R₁ through R₆ above. When nA is not less than 2, the plural R_{A5}' s may be the same or different, and may combine with each other to form a ring. R_{A5} is preferably an alkyl group or an alkoxy group, and when nA is not less than 2, at least one of the plural R_{A5}'s is preferably an alkoxy group. mA is an integer of preferably 1 or 2, nA is an integer of preferably from 0 to 3, and more preferably 1 to 3, and (mA+nA) is an integer of preferably from 1 to 6, and more preferably from 1 to 3. 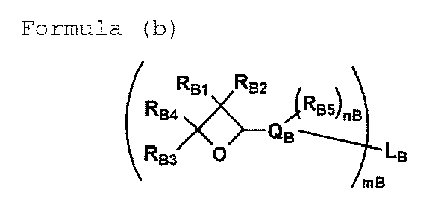 wherein Q_{B} represents a (nB+2)-valent aromatic group; R_{B1} through R_{B4} independently represent a hydrogen atom or a substituent; R_{B5} represents a substituent; L_{B} represents an mB-valent linkage group; mB represents an integer of from 2 to 4; and nB represents an integer of from 0 to 4. The (nB+2)-valent aromatic group represented by Q_{B} represents the same aromatic group as denoted above. The substituent represented by R_{B1} through R_{B4} represents the same as those as denoted in R₁ through R₆ above. R_{B1} through R_{B4} each are preferably a hydrogen atom, an alkyl group or an alkoxy group. The substituent represented by R_{B5} represents the same as those as denoted in R₁ through R₆ above. When nB is not less than 2, the plural R_{B5}'s may be the same or different, and may combine with each other to form a ring. R_{B5} is preferably an alkyl group or an alkoxy group, mB is an integer of preferably 2 or 3, and nB is an integer of preferably from 0 to 3, and more preferably 0 to 2.
preferably represents a single bond or an mB-valent linkage group having a carbon number of from 0 to 15, which may contain an oxygen atom sulfur atom in the main chain. Examples of the divalent linkage group of L_{B} include the groups listed below and their combination with -O-, -S-, -C(=O)-, or -C(=S)-.
a methylene group [-CH₂-], an ethylidene group [>CHCH₃], an isopropylidene group [>C(CH₃)₂], a 1,2-ethylene group [-CH₂CH₂-], a 1,2-propylene group [-CH (CH₃) CH₂-], a 1,3-propanediyl group [-CH₂CH₂CH₂-], a 2,2-dimethyl-1,3-propanediyl group [-CH₂C(CH₃)₂CH₂-], a 2,2-dimethoxy-1,3-propanediyl group [-CH₂C (OCH₃)₂CH₂-], a 2,2-dimethoxymethyl-1,3-propanediyl group [-CH₂C(CH₂OCH₃)₂CH₂-], a 1-methyl-1,3-propanediyl group [-CH(CH₃) CH₂CH₂-], a 1,4-butanediyl group [-CH₂CH₂CH₂CH₂-], a 1,5-pentanediyl group [-CH₂CH₂CH₂CH₂CH₂-], an oxydiethylene group [-CH₂CH₂OCH₂CH₂-], a thiodiethylene group [-CH₂CH₂SCH₂CH₂-], a 3-oxothiodiethylene group [-CH₂CH₂SOCH₂CH₂-], a 3,3-dioxothiodiethylene group [-CH₂CH₂SO₂CH₂CH₂-], a 1,4-dimethyl-3-oxa-1,5-pentanediyl group [-CH(CH₃)CH₂O CH(CH₃)CH₂-], a 3-oxopentanediyl group [-CH₂CH₂COCH₂CH₂-], a 1,5-dioxo-3-oxapentanediyl group [-COCH₂OCH₂CO-], a 4-oxa-1,7-heptanediyl group [-CH₂CH₂CH₂OCH₂CH₂CH₂-], a 3,6-dioxa-1,8-octanediyl group [-CH₂CH₂OCH₂CH₂OCH₂CH₂-], a 1,4,7-trimethyl-3,6-dioxa-1,8-octanediyl group [-CH(CH₃)CH₂O CH(CH₃)CH₂OCH(CH₃)CH₂-], a 5,5-dimethyl-3,7-dioxa-1,9-nonanediyl group [-CH₂CH₂OCH₂C(CH₃)₂CH₂OCH₂CH₂-], a 5,5-dimethoxy-3,7-dioxa-1,9-nonanediyl group [-CH₂CH₂OCH₂C(OCH₃)₂CH₂OCH₂CH₂-], a 5,5-dimethoxymethyl-3,7-dioxa-1,9-nonanediyl group [-CH₂CH₂OCH₂C(CH₂OCH₃)₂CH₂OCH₂CH₂-], a 4,7-dioxo-3,8-dioxa-1,10-decanediyl group [-CH₂CH₂O-COCH₂CH₂CO-OCH₂CH₂-], a 3,8-dioxo-4,7-dioxa-1,10-decanediyl group [-CH₂CH₂CO-OCH₂CH₂O-COCH₂CH₂-], a 1,3-cyclopentanediyl group [-1,3-C₅H₈-], a 1,2-cyclohexanediyl group [-1,2-C₆H₁₀-], a 1,3-cyclohexanediyl group [-1,3-C₆H₁₀-], a 1,4-cyclohexanediyl group [-1,4-C₆H₁₀-], a 2,5-tetrahydrofuranediyl group [2,5-C₄H₆O-], a p-phenylene group [-P-C₆H₄-], an m-phenylene group [-m-C₆H₄-], an α, α'-o-xylylene group [-o-CH₂-C₆H₄-CH₂-], an α,α'-m-xylylene group [-m-CH₂-C₆H₄-CH₂-], an α,α'-p-xylylene group [-p-CH₂-C₆H₄-CH₂-], a furane-2,5-diyl-bismethylene group [2,5-CH₂-C₄H₂O-CH₂-], a thiophene-2,5-diyl-bismethylene group [2,5-CH₂-C₄H₂S-CH₂-], an isopropylidene-bis-p-phenylene group [-p-C₆H₄-C (CH₃)₂-p-C₆H₄]

The three or more-valent linkage group are those obtained by drawing hydrogens from the above divalent groups or their combination with -O-, -S-, -C(=O)-, or -C(=S)-.

A synthetic method of these oxetane compounds is not specifically limited, and these compounds can be synthesized according to a conventional method, for example, a method described in the following literatures:
A: Hu Xianming, Richard M. Kellogg, Synthesis, 533-538, May (1955).
B: A.O. Fitton, J. Hill, D. Ejane, R. Miller, Synth., 12, 1140 (1987).
C: Toshiro Imai and Sinya Nishida, Can. J. Chem. Vol. 59, 2503-2509 (1981).
D: Nobujiro Shimizu, Shintaro Yamaoka, and Yuho Tsuno, Bull. Chem. Soc. Jpn., 56, 3853-3854 (1983).
E: Walter Fisher and Cyril A. Grob, Helv. Chim. Acta., 61, 2336 (1978).
F: Chem. Ber., 101, 1850 (1968).
G: "Heterocyclic Compounds with Three- and Four-membered Rings", Part Two, Chapter IX, Interscience Publishers, John Wiley & Sons, New York (1964).
H: Bull. Chem. Soc. Jpn., 61, 1653 I: Pure Appl. Chem., A29 (10), 915 J: Pure Appl. Chem., A30 (2 & amp; 3), 189 K: Japanese Patent O.P.I. Publication No. 6-16804
L: German Patent No. 1,021,858

Examples of the oxetane compounds represented by formula (10), (a), or (b) will be listed below, but the invention is not specifically limited thereto.

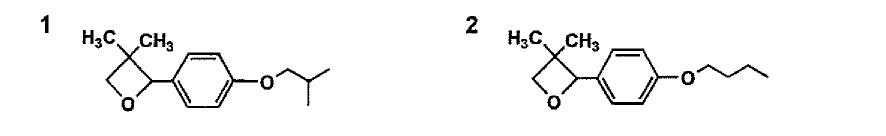

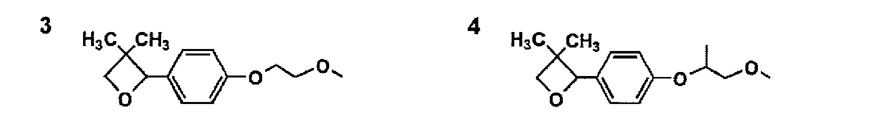

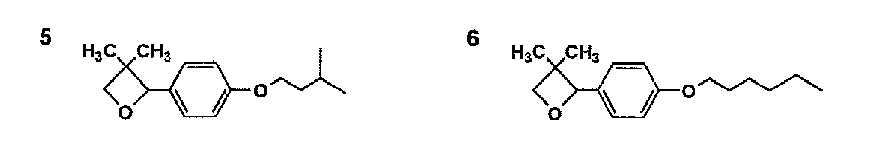

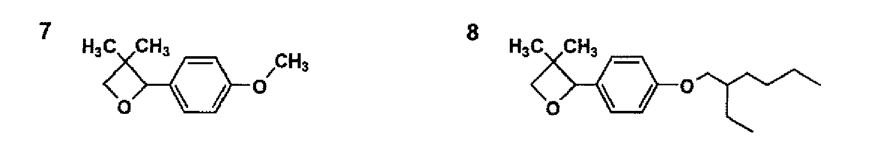

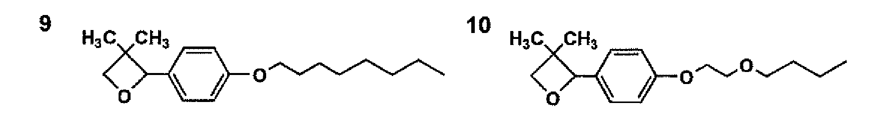

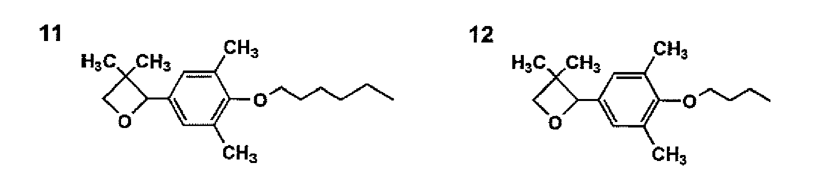

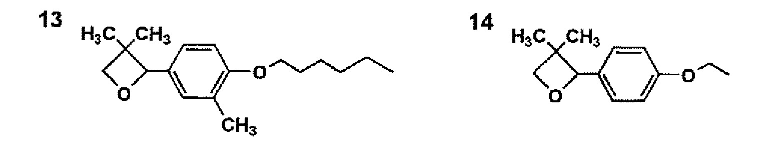

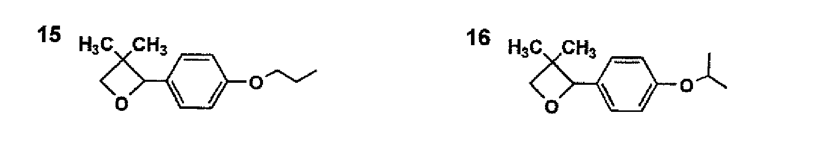

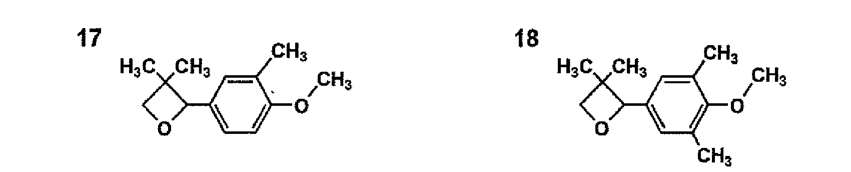

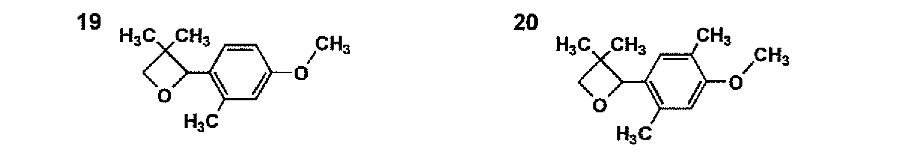

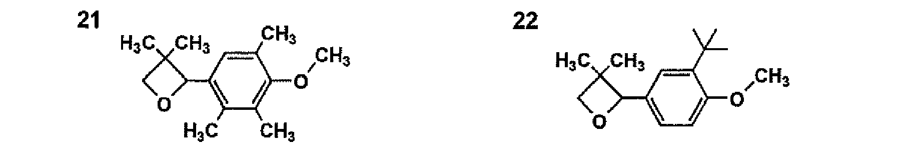

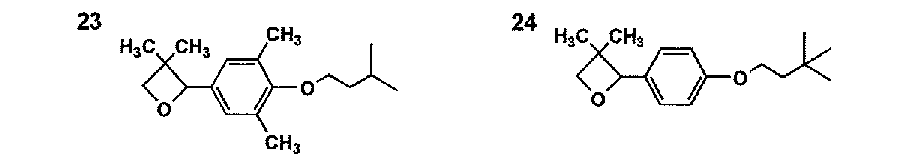

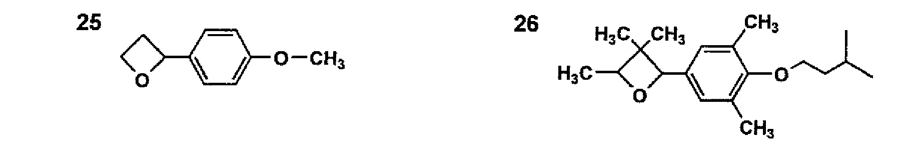

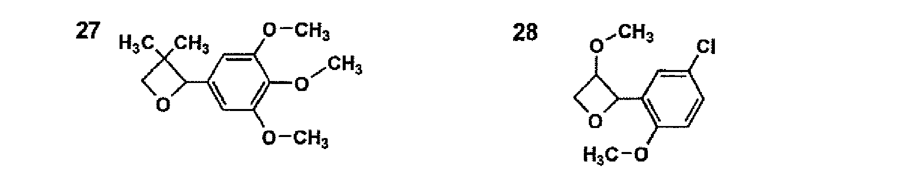

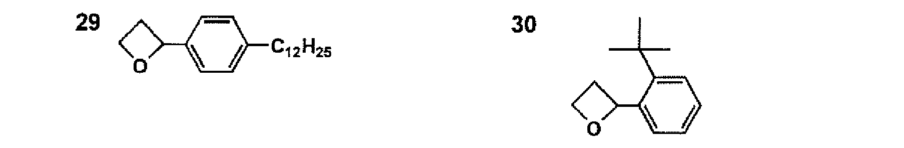

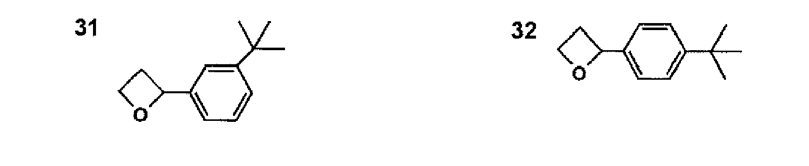

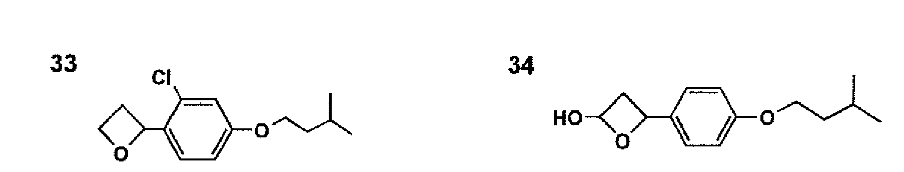

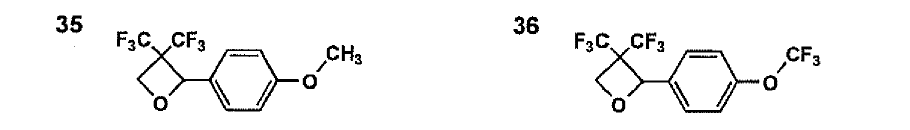

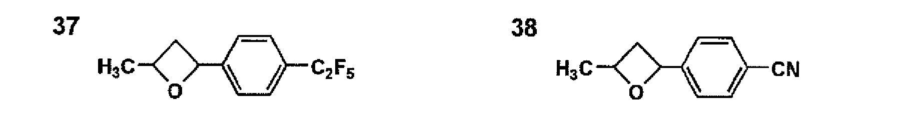

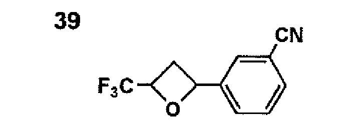

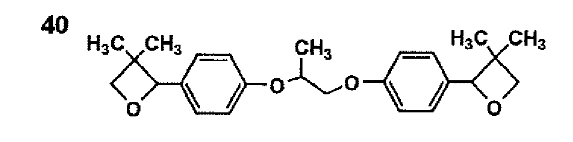

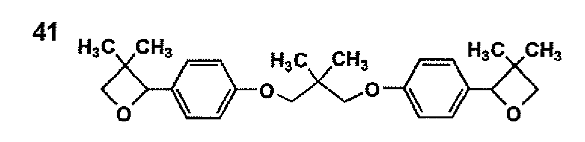

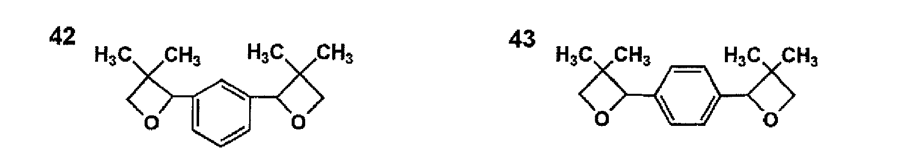

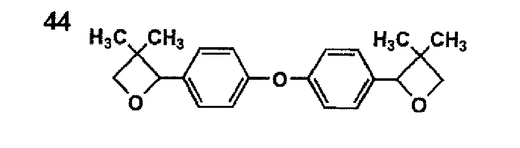

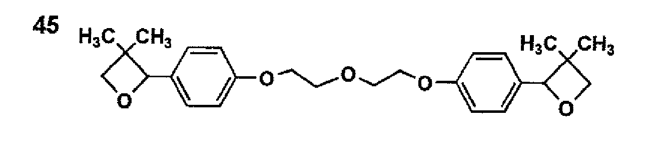

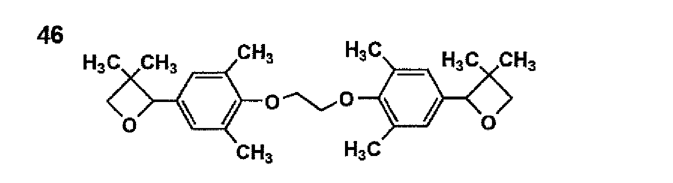

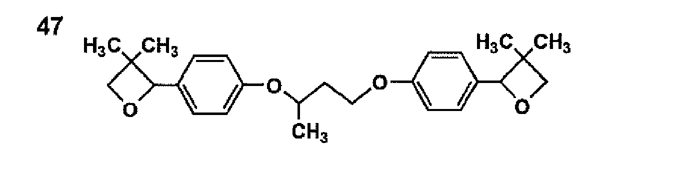

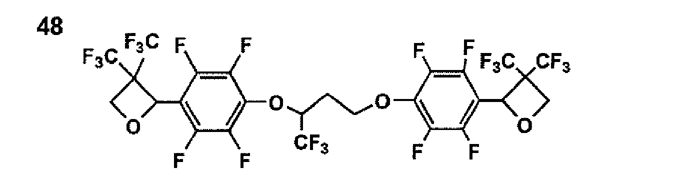

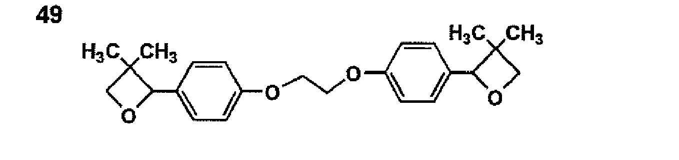

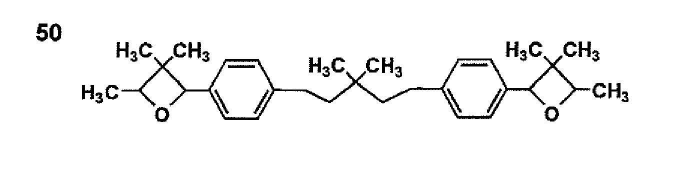

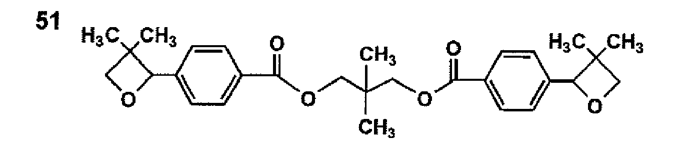

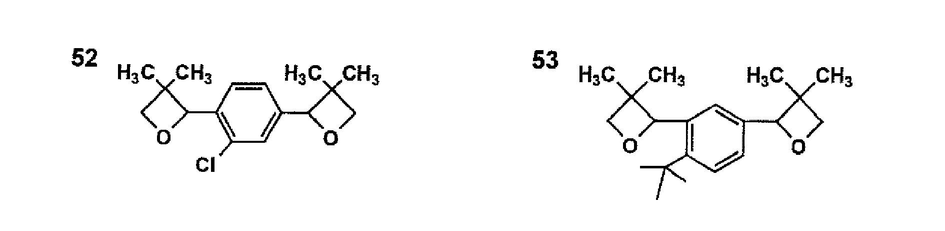

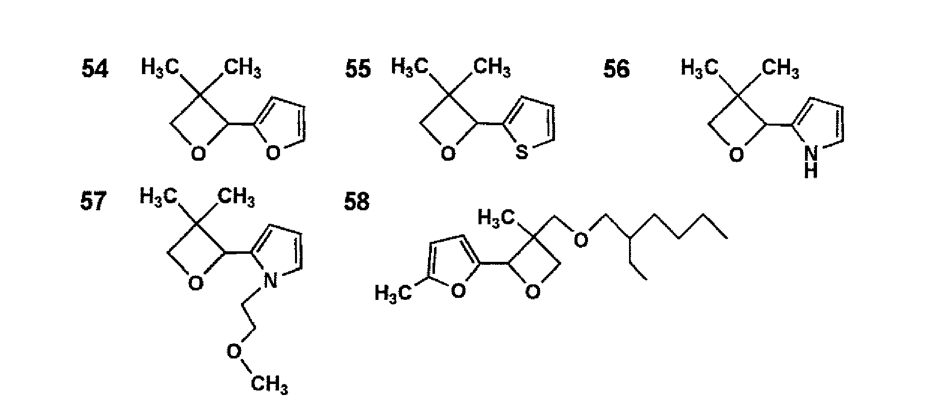

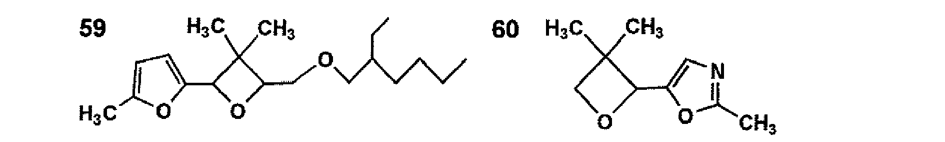

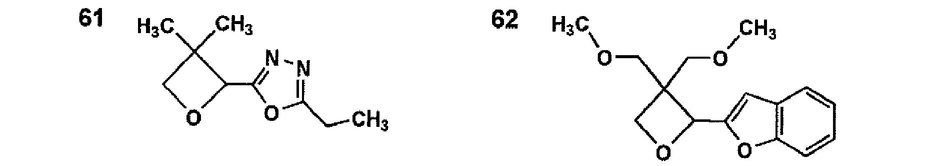

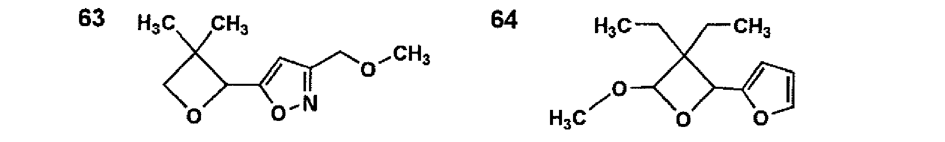

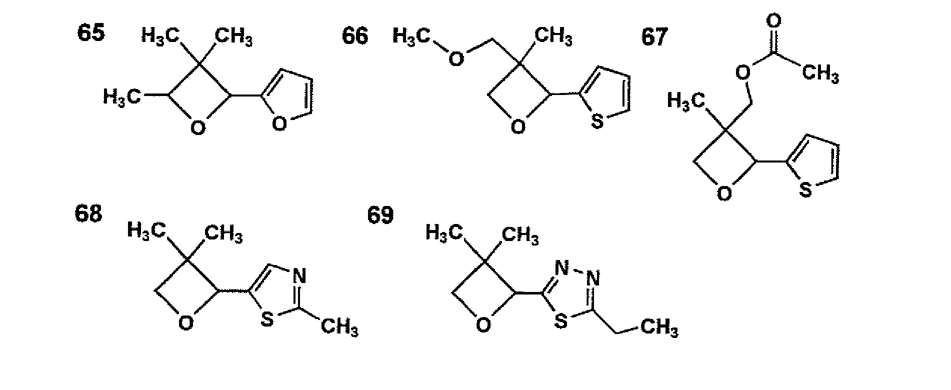

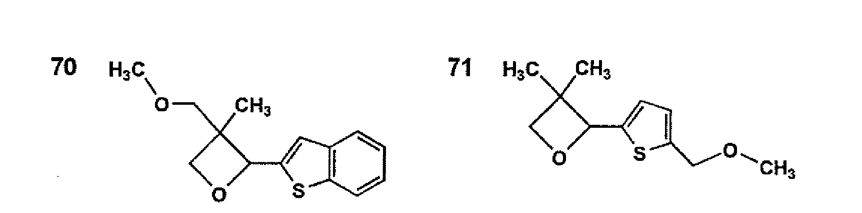

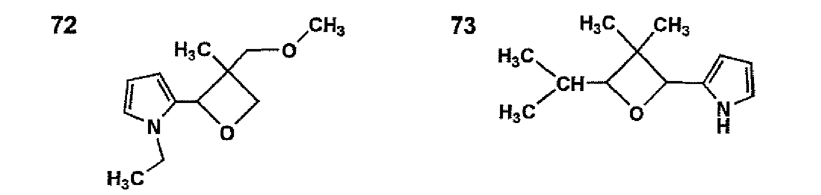

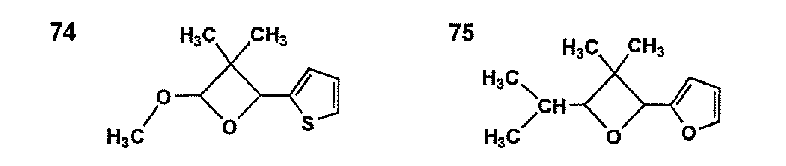

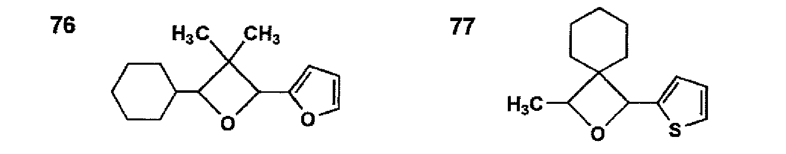

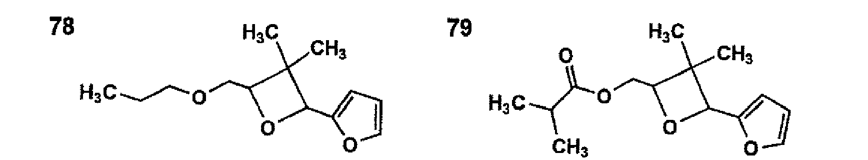

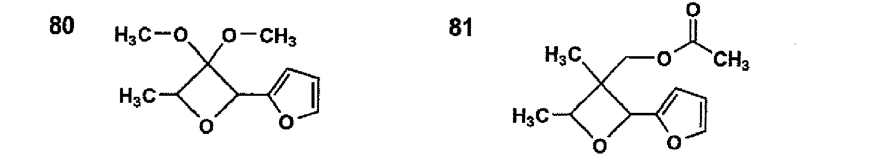

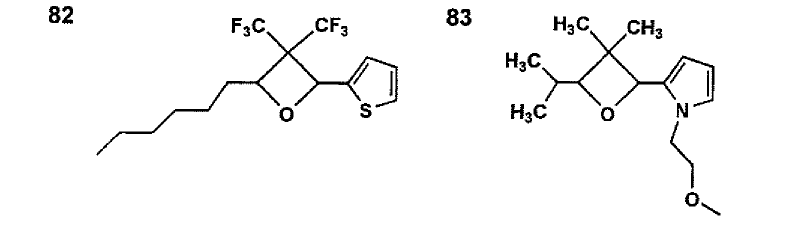

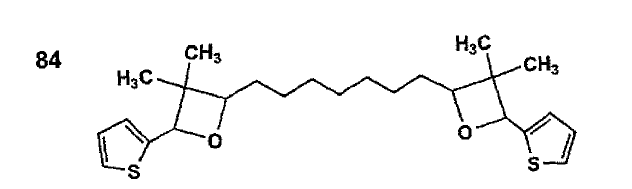

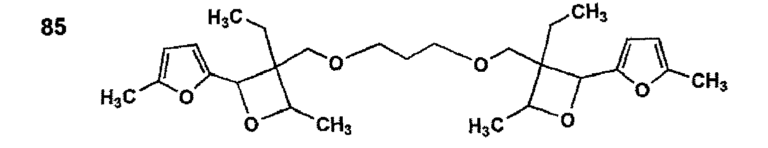

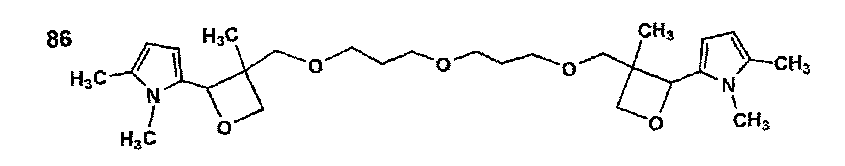

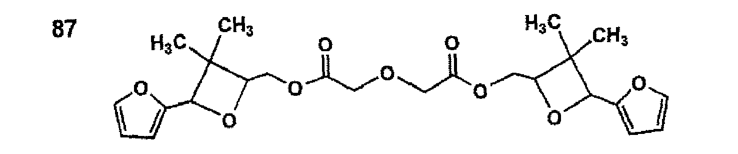

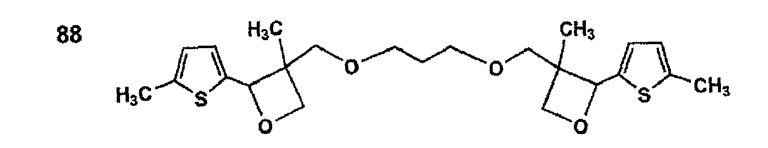

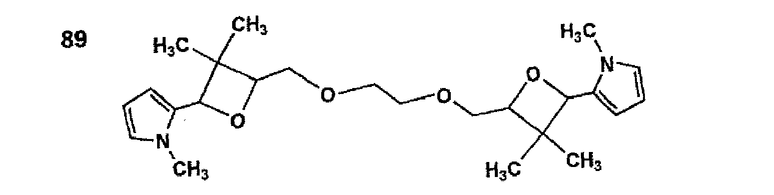

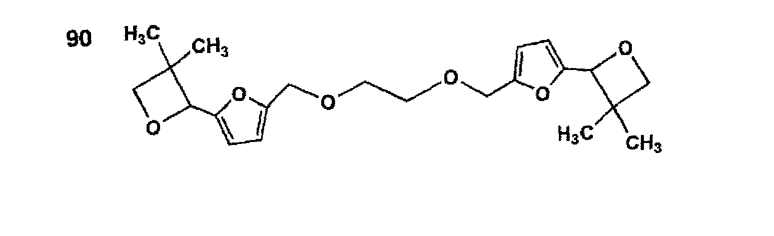

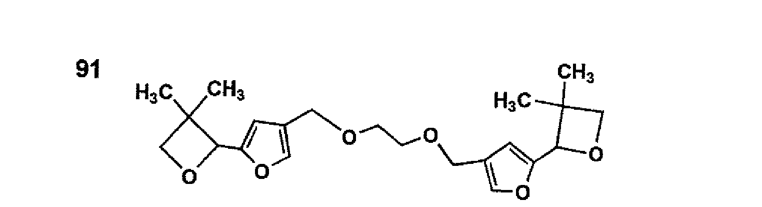

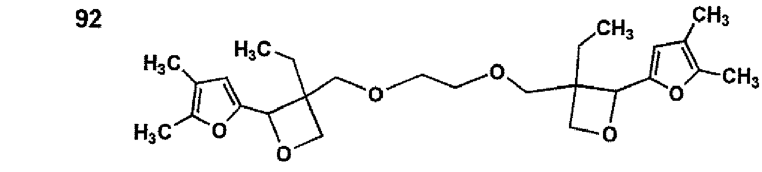

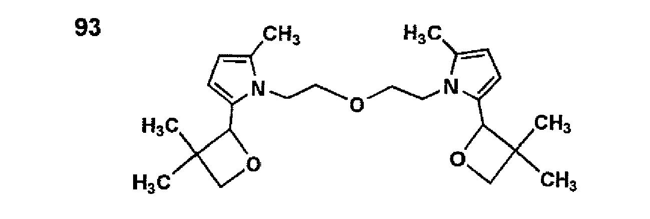

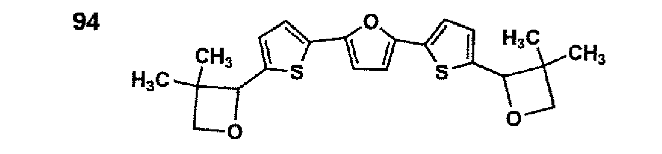

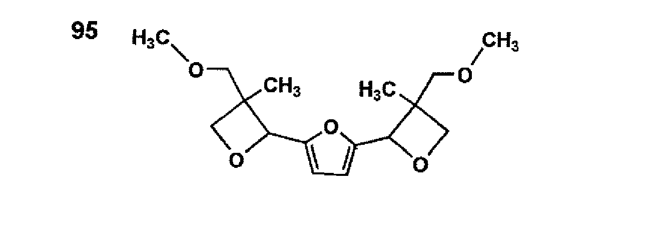

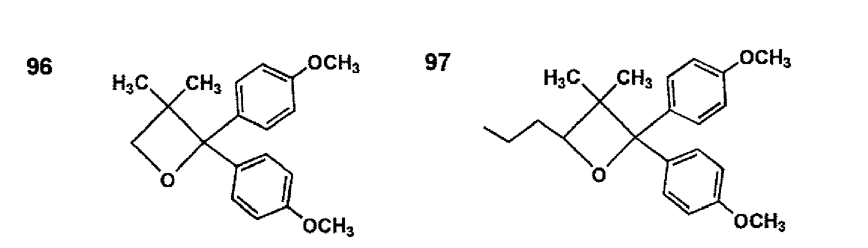

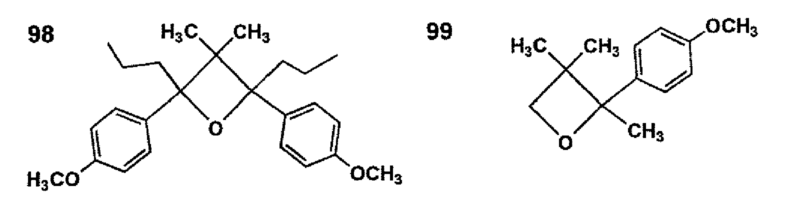

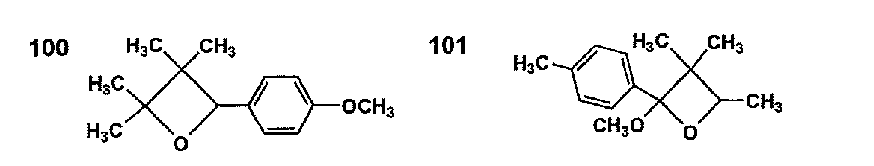

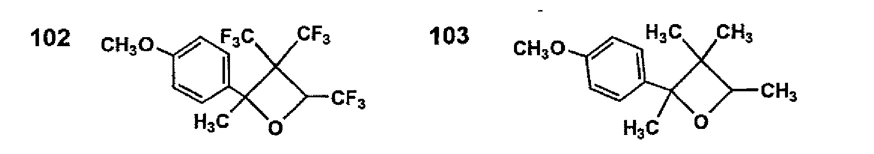

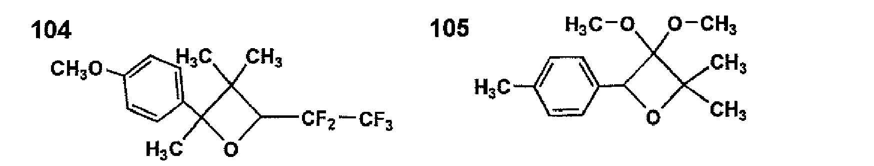

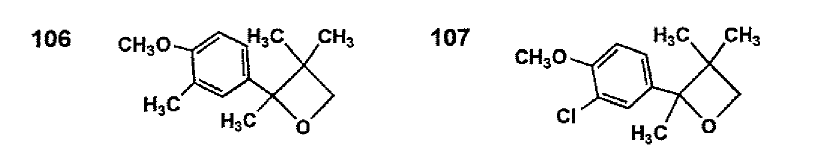

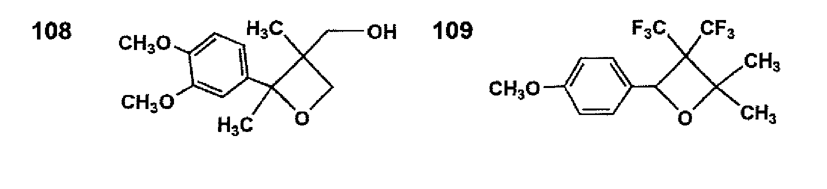

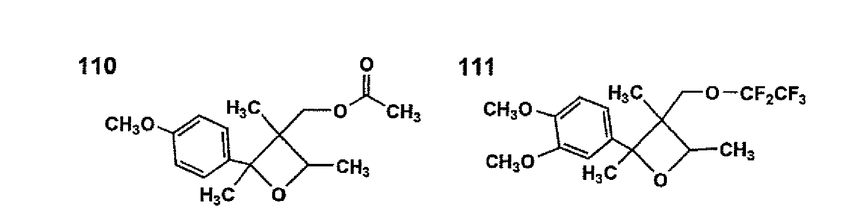

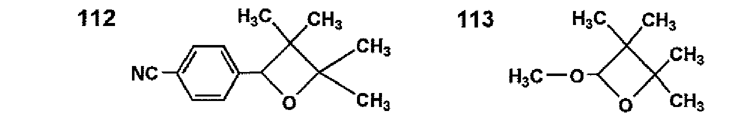

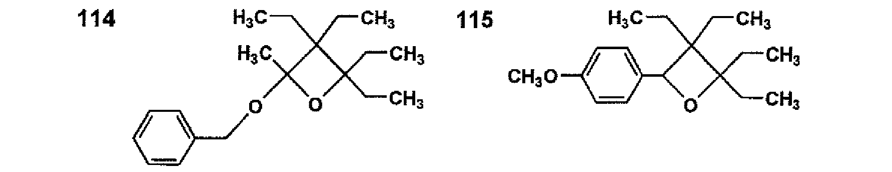

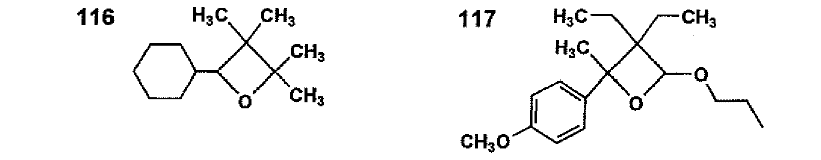

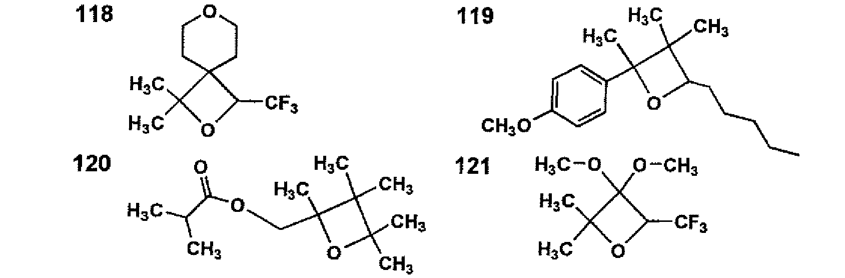

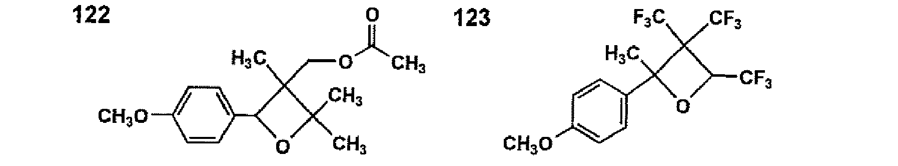

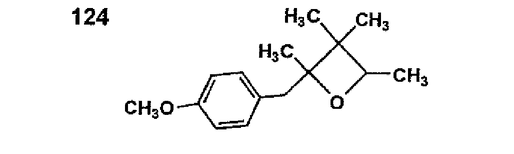

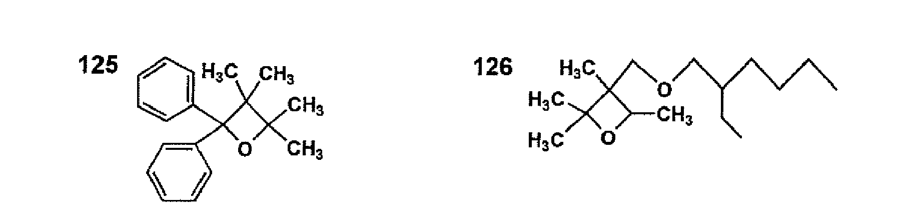

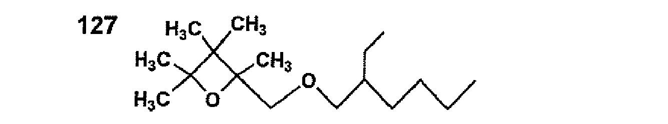

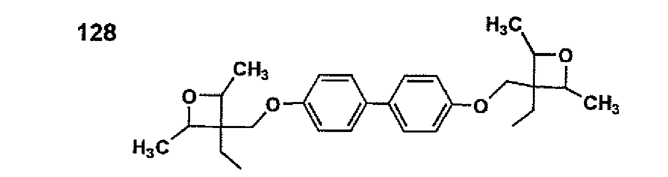

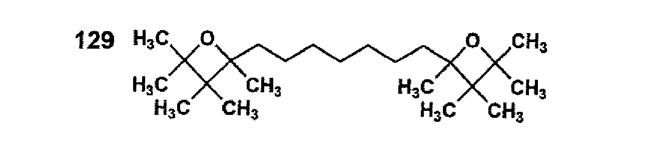

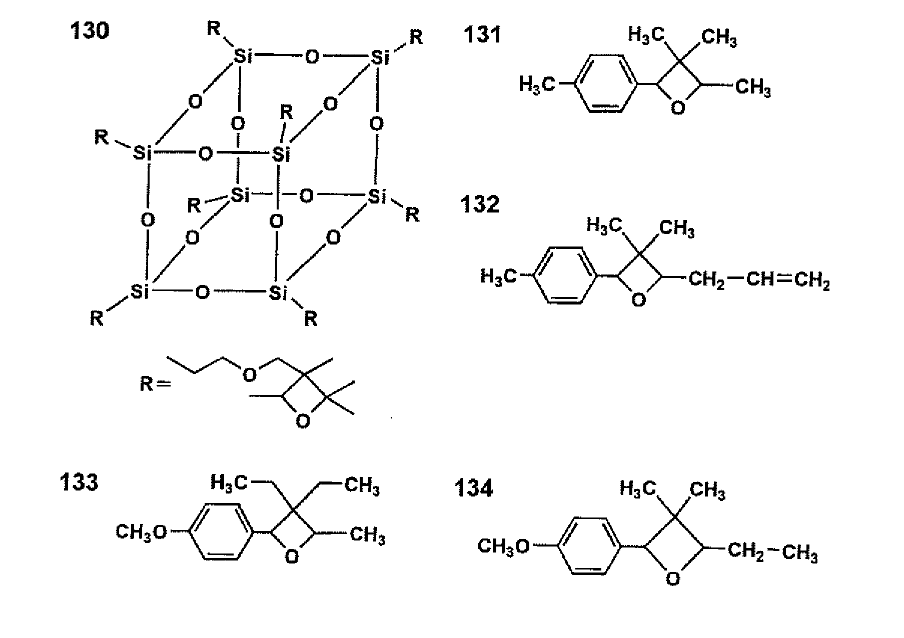

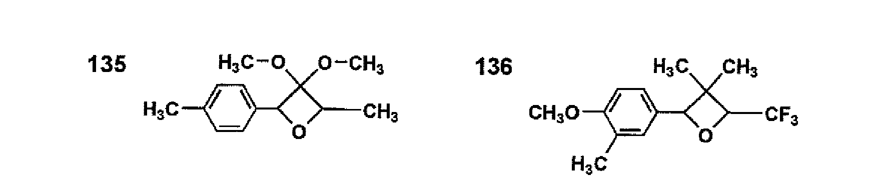

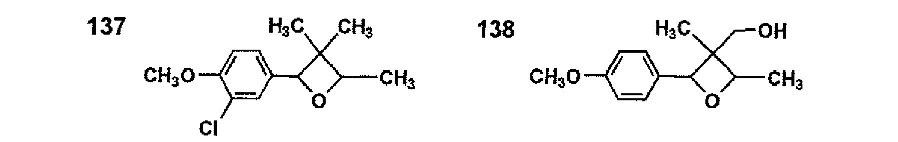

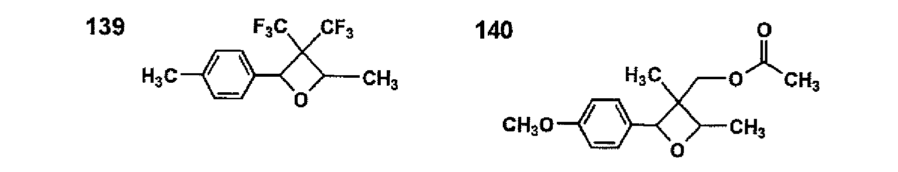

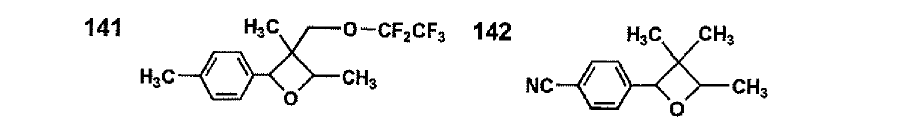

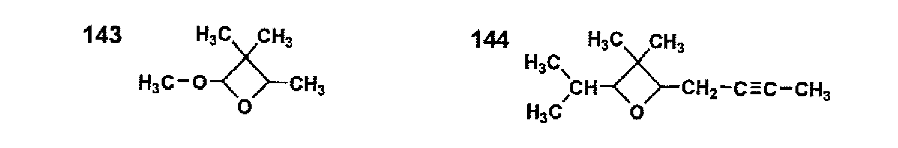

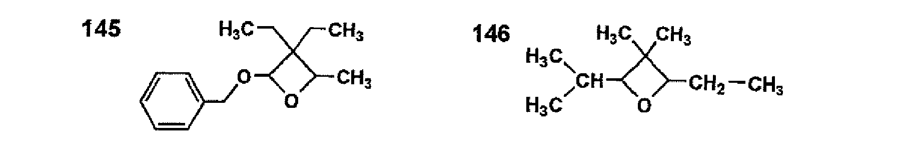

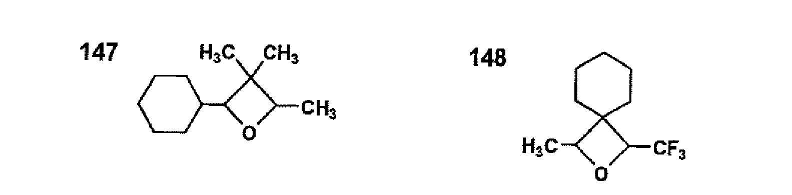

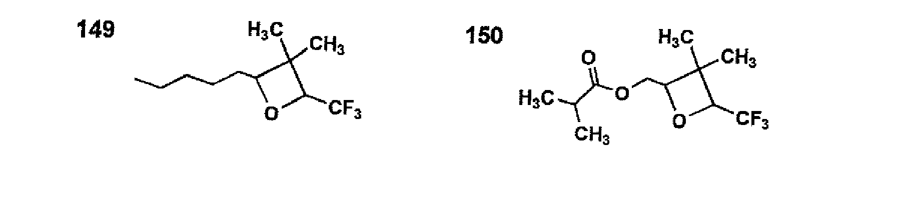

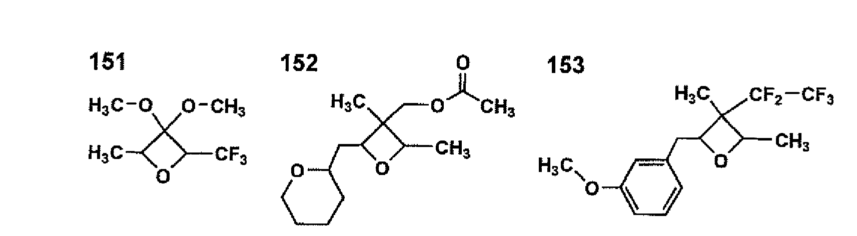

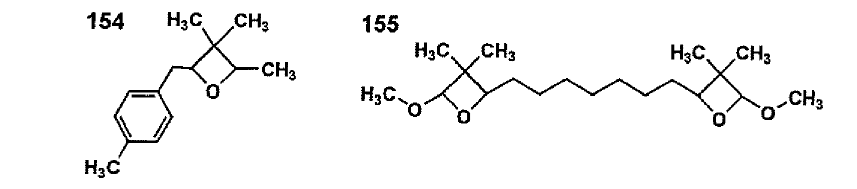

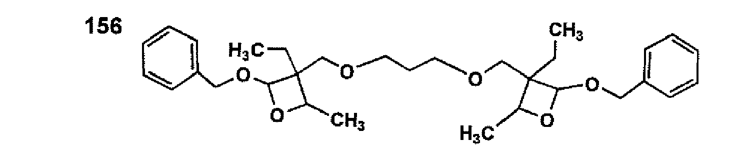

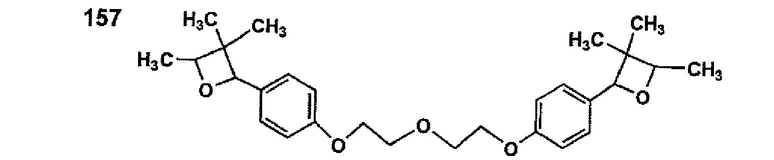

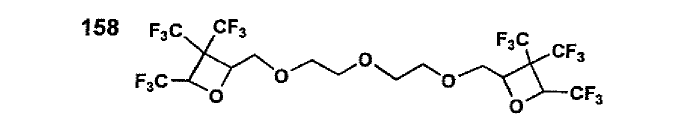

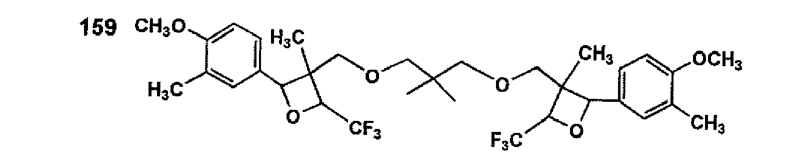

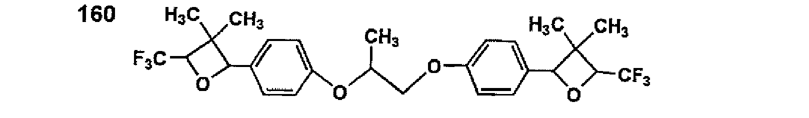

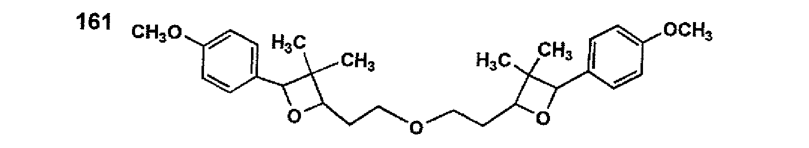

The substituents at the 3-position of the oxetane ring is not specifically limited, but is preferably an alkyl, alkoxy, acyloxy, alkoxycarbonyl, aryl, aromatic heterocyclic, or fluorinated alkyl group, or a halogen atom as described above.

The oxetane compound having a substituent at the 3-positin of the oxetane ring is preferably one having no substituent at the 2-position of the oxetane ring. As the oxetane compound having no substituent at the 2-position of the oxetane ring, there is a compound represented by formula (101) below.

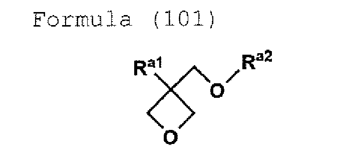

In formula (101), R^{a1} represents a hydrogen atom, an alkyl group having from 1 to 6 carbon atoms such as a methyl group, an ethyl group, a propyl group, a butyl group, etc.; a fluoroalkyl group having from 1 to 6 carbon atoms; an allyl group; an aryl group; a furyl group; or a thienyl group; and R^{a2} represents an alkyl group having from 1 to 6 carbon atoms such as a methyl group, an ethyl group, a propyl group, a butyl group, etc.; an alkenyl group having from 2 to 6 carbon atoms such as a 1-propenyl group, a 2-propenyl group, a 2-methyl-1-propenyl group, a 2-methyl-2-propenyl group, a 1-butenyl group, a 2-butenyl group, a 3-butenyl group, etc.), an aromatic ring-containing group such as a phenyl group, a benzyl group, a fluorobenzyl group, a methoxybenzyl group; a phenoxyethyl group, etc.; an alkylcarbonyl group having from 2 to 6 carbon atoms such as an ethylcarbonyl group, a propylcarbonyl group, a butylcarbonyl group, etc.; an alkoxycarbonyl group having from 2 to 6 carbon carbons such as an ethoxycarbonyl group, a propoxycarbonyl group, a butoxycarbonyl group, etc.; an N-alkylcarbamoyl group having from 2 to 6 carbon atoms such as an ethylcarbamoyl group, a propylcarbamoyl group, a butylcarbamoyl group, a pentylcarbamoyl, etc. The oxetane compound used in the invention is preferably a compound having one oxetane ring in that the composition containing such a compound is excellent in tackiness, low in viscosity, and is easy to handle.

As one example of an oxetane compound having two oxetane rings, an oxetane compound represented by the following formula (102) is cited.

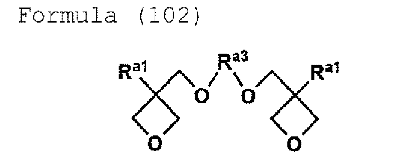

In formula (102), R^{a1} represents the same group as those denoted in R^{a1} of formula (101); and R^{a3} represents a straight chained or branched alkylene group such as an ethylene group, a propylene group, a butylene group, etc.; a straight chained or branched polyalkyleneoxy group such as a poly(ethyleneoxy) group, a poly(propyleneoxy group, etc.; a straight chained or branched unsaturated divalent hydrocarbon group such a propenylene group, a methylpropenylene group, a butenylene group, etc.; an alkylene group containing a carbonyl group; an alkylene group containing a carbonyloxy group; or an alkylene group containing a carbamoyl group.

R^{a3} also represents a polyvalent group selected from groups represented by the following formulae (103), (104), and (105).

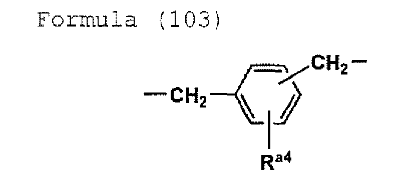

In formula (103), R^{a4} represents a hydrogen atom, an alkyl group having from 1 to 4 carbon atoms such as a methyl group, an ethyl group, a propyl group, a butyl group, etc.; an alkoxy group having from 1 to 4 carbon atoms such as a methoxy group, an ethoxy group, a propoxy group, a butoxy group, etc.; a halogen atom such as a chlorine atom, a bromine atom, etc.; a nitro group; a cyano group; a mercapto group; a lower alkylcarboxy group; a carboxyl group; or a carbamoyl group.

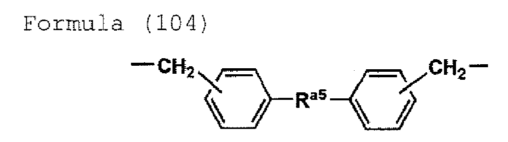

In formula (104), R^{a5} represents an oxygen atom, a sulfur atom, a methylene group, -NH-, -SO-, -SO₂-, -(CF₃)₂-, or -C(CH₃)₂-.

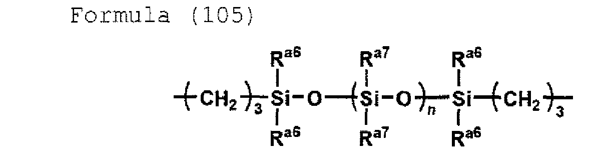

In formula (105), R^{a6} represents an alkyl group having from 1 to 4 carbon atoms such as a methyl group, an ethyl group, a propyl group, a butyl group, etc., or an aryl group; "n" represents an integer of from 0 to 2000; and R^{a7} represents an alkyl group having from 1 to 4 carbon atoms such as a methyl group, an ethyl group, a propyl group, a butyl group, etc, or an aryl group, or a group represented by the following formula (106).

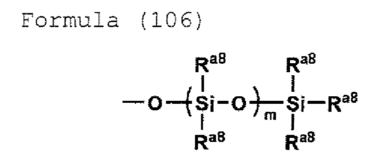

In formula (106), R^{a8} represents an alkyl group having from 1 to 4 carbon atoms such as a methyl group, an ethyl group, a propyl group, a butyl group, etc., or an aryl group; and m represents an integer of from 0 to 100.

Examples of a compound having two oxetane rings include the following compounds.

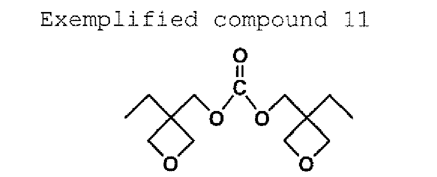

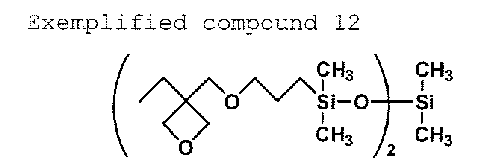

Compound of formula (11) is a compound in which in formula (102), R^{a1} is an ethyl group, and R^{a3} is a carbonyl group. Compound of formula (12) is a compound in which in formula (102), R^{a1} is an ethyl group, and R^{a3} is a group in which in formula (105), R^{a6} is a methyl group, R^{a7} is a methyl group, and n is 1.

As another example of an oxetane compound having two oxetane rings, an oxetane compound represented by the following formula (107) is cited.

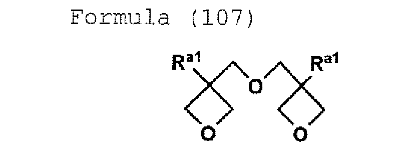

In formula (107), R^{a1} is the same as those denoted in R^{a1} of formula (101).

As an example of an oxetane compound having three or four oxetane rings, an oxetane compound represented by the following formula (108) is cited.

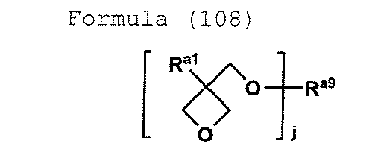

In formula (108), R^{a1} is the same as those denoted in R^{a1} of formula (101); and R^{a9} represents a branched alkylene group having 1 to 12 carbon atoms such as a group represented by formula A, B, or C below, a branched polyalkyleneoxy group such as a group represented by formula D below, or a branched alkylene group containing a silylether group such as a group represented by E below. In formula (108), j represents an integer of 3 or 4.

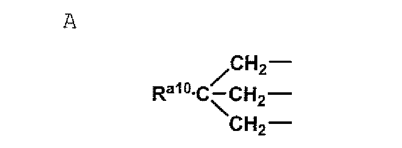

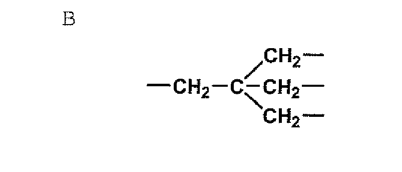

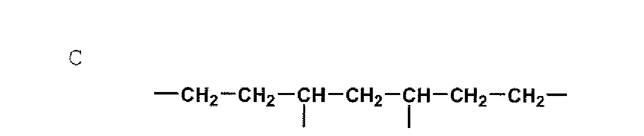

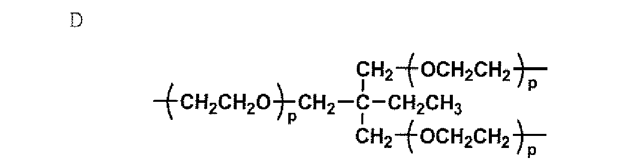

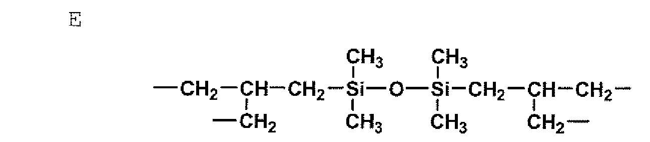

In A above, R^{a10} represents a lower alkyl group such as a methyl group, an ethyl group, or a propyl group. In D above, p represents an integer of from 1 to 10.

As an example of an oxetane compound having tree or four oxetane rings, Exemplified compound 13 below is cited.

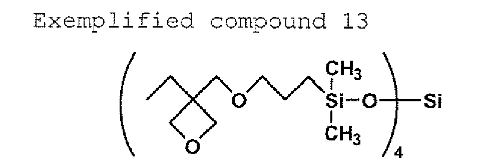

As a compound having 1 to 4 oxetane rings other than the compounds described above, a compound represented by formula (109) below is cited.

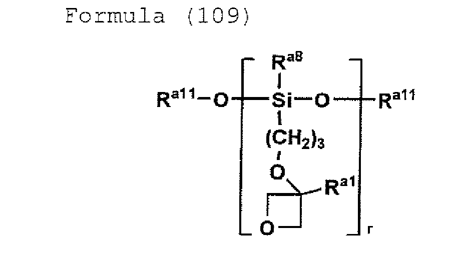

In formula (109), R^{a8} is the same as those denoted in R^{a8} of formula (106); R^{a11} represents an alkyl group having 1 to 4 carbon atoms such as a methyl group, an ethyl group, or a propyl group, or a trialkylsilyl group; r represents an integer of from 1 to 4.

The preferred oxetane compounds used in the invention include compounds as shown below.

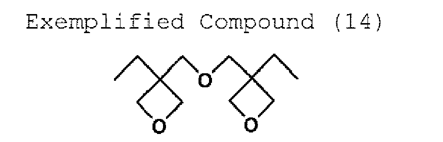

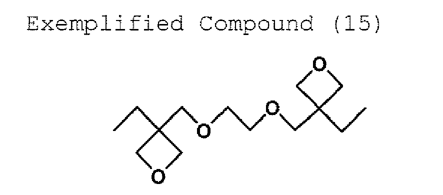

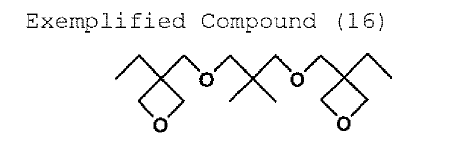

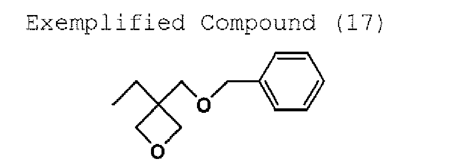

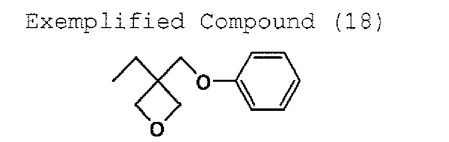

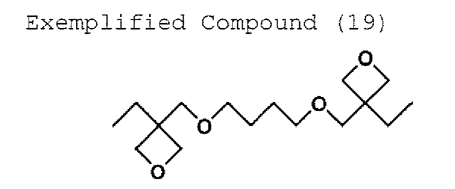

Synthetic method of the above-described oxetane compounds is not specifically limited, and known methods can be used. There is, for example, a method disclosed in D. B. Pattison, J. Am. Chem. Soc., 3455, 79 (1957) in which an oxetane ring is synthesized from diols.

Besides the above-described oxetane compounds, polymeric oxetane compounds having 1 to 4 oxetane rings with a molecular weight of 1000 to 5000 can be used. Examples thereof include compounds listed below.

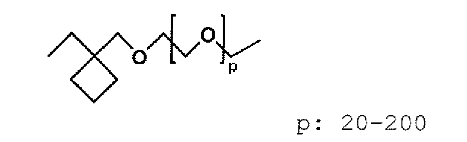

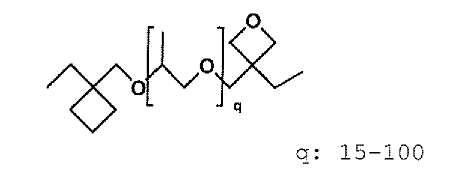

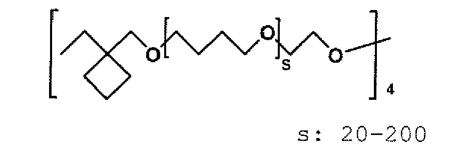

Next, the compound releasing an acid on actinic ray exposure in the invention (hereinafter also referred to as photolytic acid generating agent) will be explained.

The ink used in the invention may contain a photo acid generator. As the photolytic acid generating agent in the invention, for example, compounds used in a chemical amplification type photo resist or in a light cation polymerizable composition are used (Organic electronics material seminar "Organic material for imaging" from Bunshin publishing house (1993), refer to page 187 - 192). Examples of the photolytic acid generating agent suitably used in the ink of the invention will be listed below.

Firstly, a B(C₆F₅)₄⁻, PF₆⁻, ASF₆⁻, SbF₆⁻, CF₃SO₃⁻ salt of an aromatic onium compound such as an aromatic diazonium, ammonium, iodonium, sulfonium, or phosphonium compound, can be listed.

The salts having as the counter anion preferably borate ion or PF₆⁻ are preferred in view of high acid generating capability.

Examples of the onium compound used in the invention will be shown below.

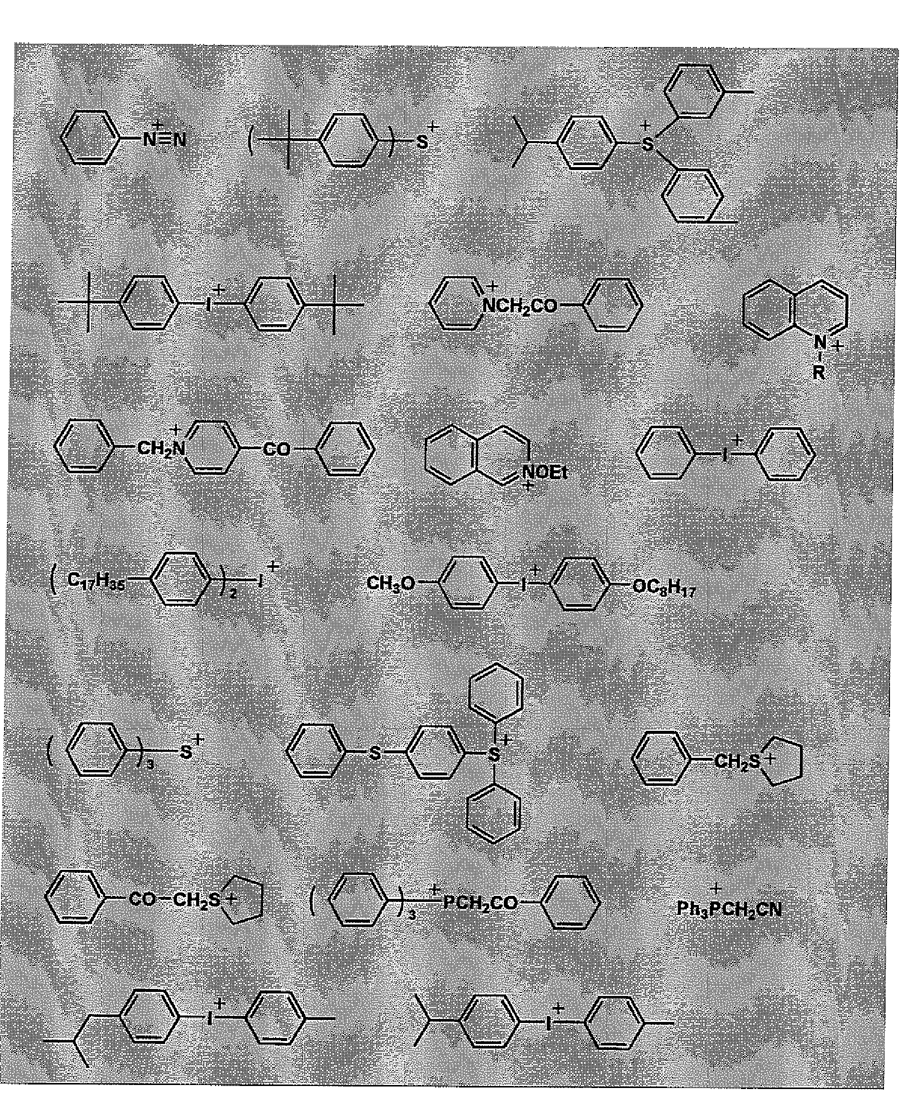

Secondly, sulfone compounds, which generate a sulfonic acid, can be listed. Examples thereof will be shown below.

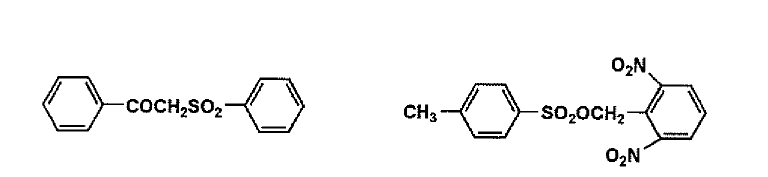

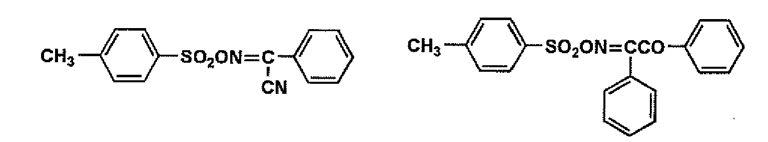

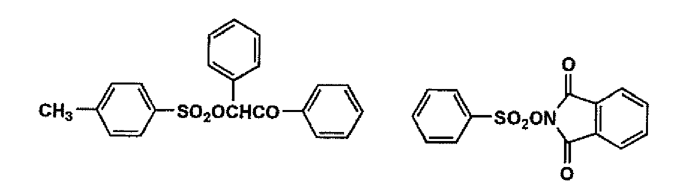

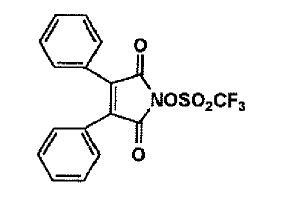

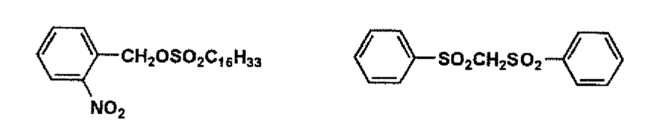

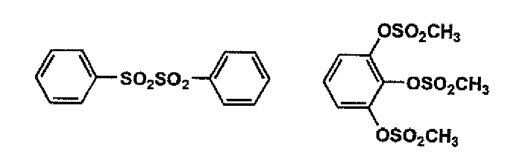

Thirdly, halide compounds, which generate hydrogen halide, can also be used. Examples thereof will be shown below.

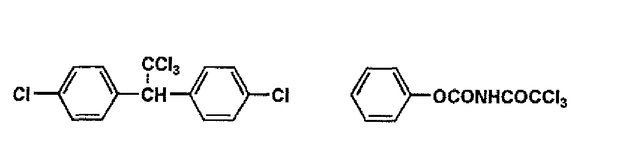

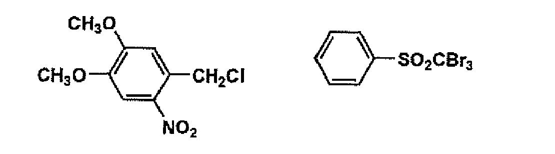

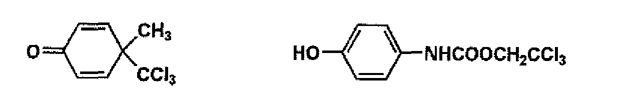

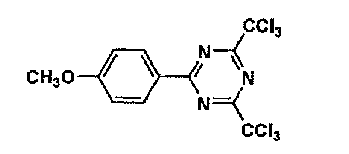

Fourthly, iron arene complexes, for example, those as described below, can be listed.

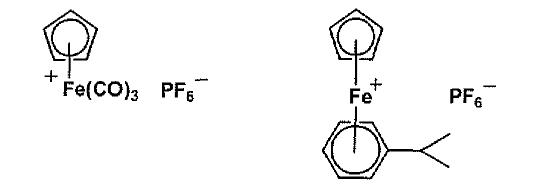

The photolytic acid generating agent utilized in the invention includes acid generators such as aryl sulfonium salt derivatives (for example, Siracure UVI-6990 and Siracure UVI-6974, manufactured by Union Carbide Corp., Adekaoptomer SP-150, Adekaoptomer SP-152, Adekaoptomer SP-170 and Adekaoptomer SP-172, manufactured by Asahi Denka Industry Co., Ltd.), aryl iodonium salt derivatives (for example, RP-2074, manufactured by Rohdia Corp.), allene-ion complex derivatives (for example, Irgacure 261, manufactured by Ciba-Geigy Corp.), diazonium salt derivatives, triazine type initiators and other halogenide compounds. The photolytic acid generating agent content is preferably from 0.2 to 20 weight parts based on 100 weight parts of compound undergoing cationic polymerization. These acid generating agents can be utilized singly or as an admixture of two or more thereof.

In the invention, the photolytic acid generating agent used in the actinic ray curable composition or ink is preferably an onium salt, more preferably a sulfonium salt, and most preferably a sulfonium salt represented by formula (1-1) above. Particularly, the sulfonium salt has advantage of providing a cured layer difficult to cause coloration after light exposure.

In formula (I-1), R₁₁, R₁₂ and R₁₃ independently represent a substituent. Examples of the substituent include a halogen atom (such as a chlorine atom, a bromine atom or a fluorine atom), an alkyl group having 1 to 6 carbon atoms (such as a methyl group, an ethyl group, a propyl group, an iso-propyl group or a butyl group), a cycloalkyl groups having 3 to 6 carbon atoms (such as a cyclopropyl group, a cyclobutyl group, a cyclopentyl group or a cyclohexyl group), an alkenyl group having 1 to 6 carbon atoms (such as a vinyl group, a 1-propenyl, a 2-propenyl group or a 2-butenyl group), an alkynyl group having 1 to 6 carbon atoms (such as an acetylenyl group, a 1-propynyl group, a 2-propynyl group or a 2-butynyl group), an alkoxy groups having 1 to 6 carbon atoms (such as a methoxy group, an ethoxy group, an n-propoxy group, an iso-propoxy group, an n-butoxy group or a tertbutoxy group), an alkylthio group having 1 to 6 carbon atoms (such as a methylthio group, an ethylthio group, an n-propylthio group, an iso-propylthio group, an n-butylthio group or a tert-butylthio group), an aryl group having 6 to 14 carbon atoms (such as a phenyl group, a naphthyl group or an anthrathenyl), an aryloxy group having 6 to 10 carbon atoms (such as a phenoxy group or a naphthoxy group), an arylthio group having 6 to 10 carbon atoms (such as a phenythio or a naphthylthio group), an acyl group (such as an acetyl, a propionyl group, a trifluoroacetyl group or benzoyl group), an acyloxy group (such as an acetoxy group, a propionyloxy group, a trifluoroacetoxy group or a benzoyloxy group), an alkoxycarbonyl group (such as a methoxycarbonyl group, an ethoxycarbonyl group or a tert-butoxycarbonyl), a hetero atom-containing aromatic ring group having 4 to 8 carbon atoms (such as a furyl group or a thienyl group), a nitro group and a cyano group.

Preferable substituents are a halogen atom, an alkyl group, an alkyloxy group, an aryl group, an aryloxy group, an arylthio group and an acyl group. m, n and p each are an integer of 0 to 2, and each preferably more than or equal to 1. X₁₁⁻ represents a counter anion. Counter anions include complex ions such as BF₄⁻, B(C₆F₅)₄⁻, PF₆⁻, AsF₆⁻ and SbF₆⁻_{'} sulfonate ions such as p-CH₃C₆H₄SO₃⁻ and CF₃SO₃⁻. The counter anion is preferably a borate ion and PF₆⁻, with respect to high acid generating capability.

Typical examples of the sulfonium compound invention will be listed below, however, this invention is not limited thereto.

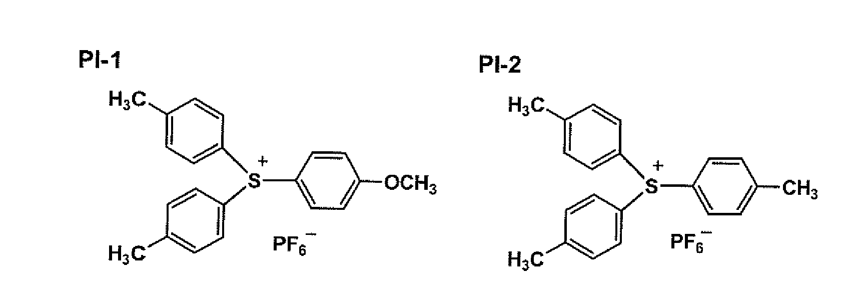

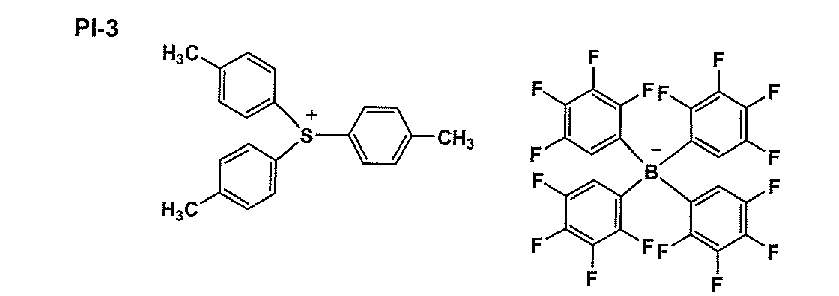

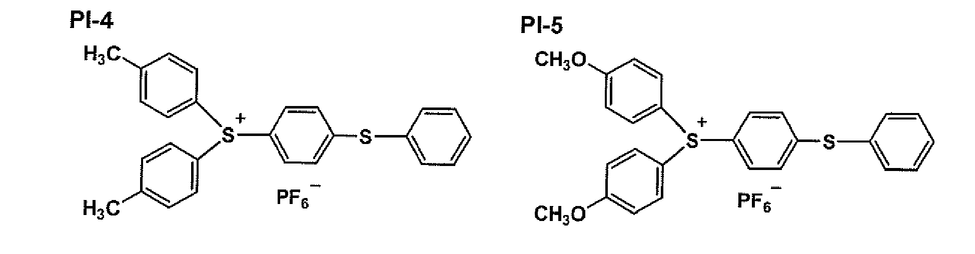

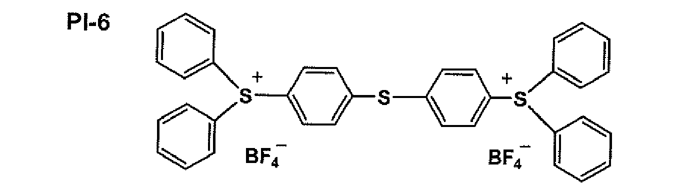

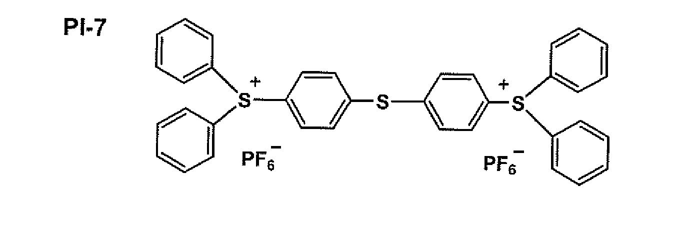

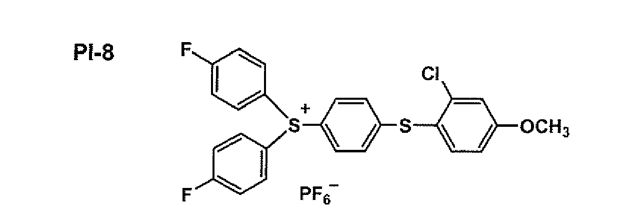

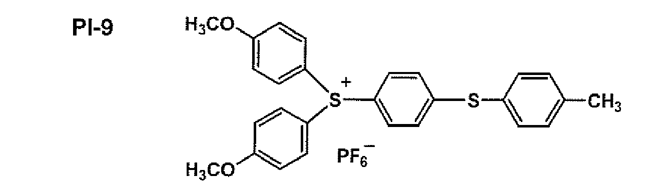

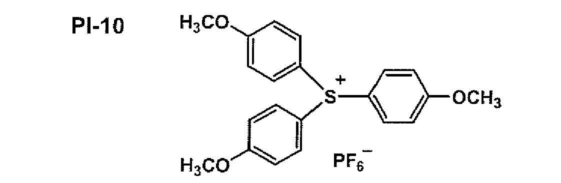

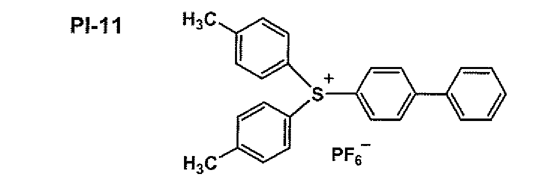

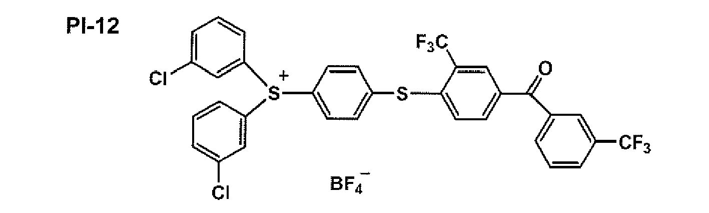

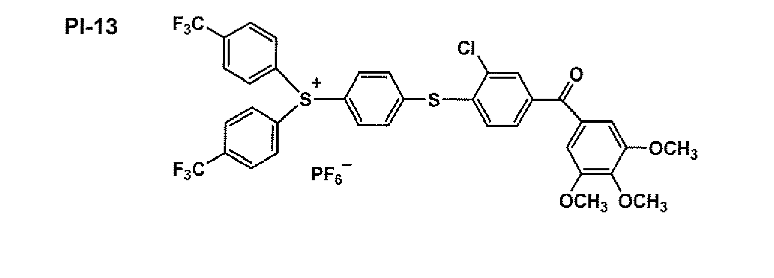

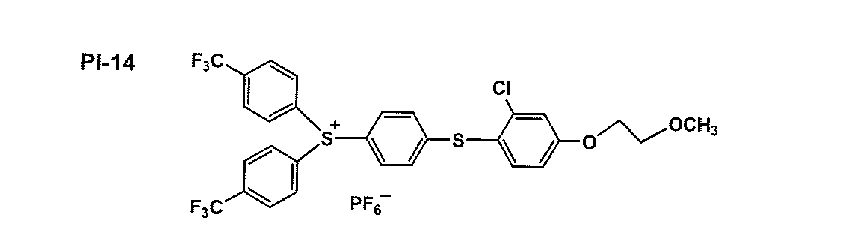

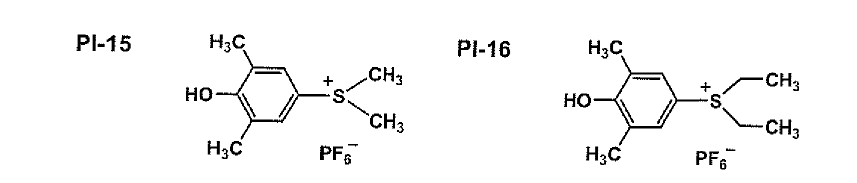

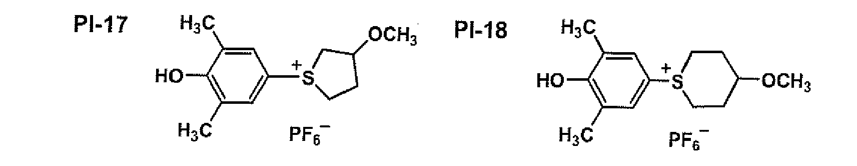

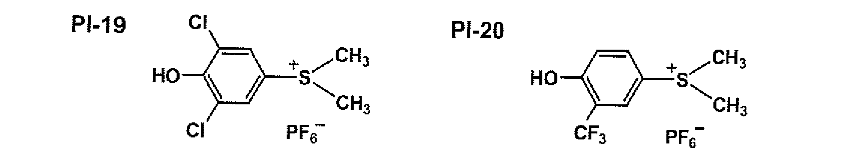

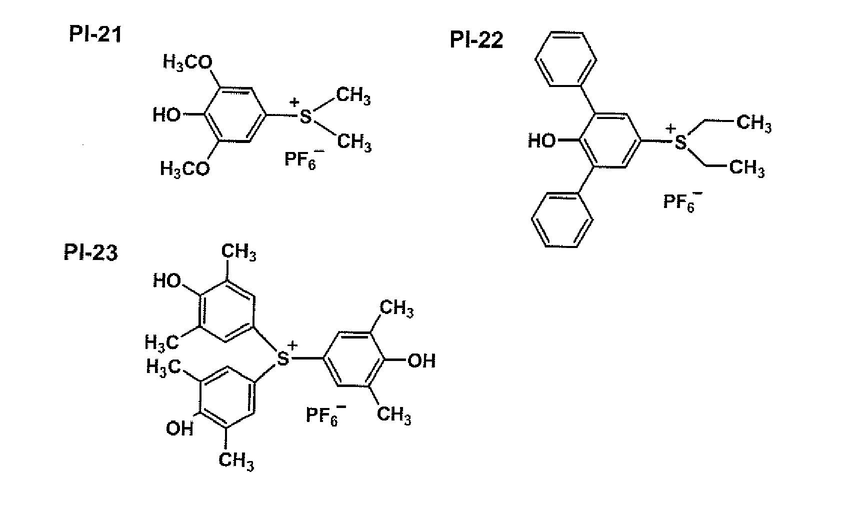

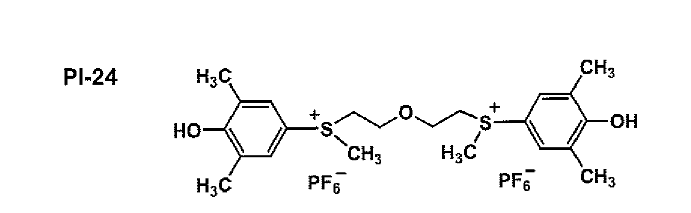

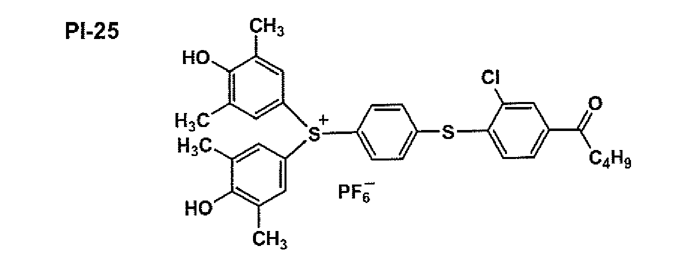

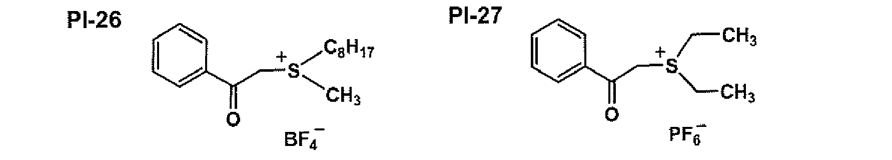

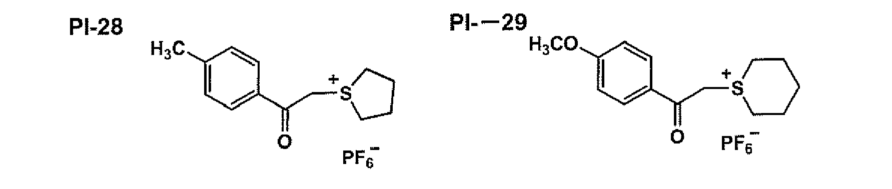

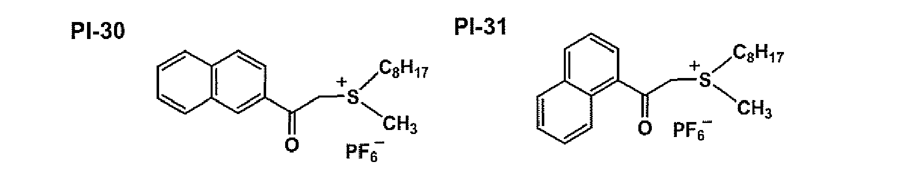

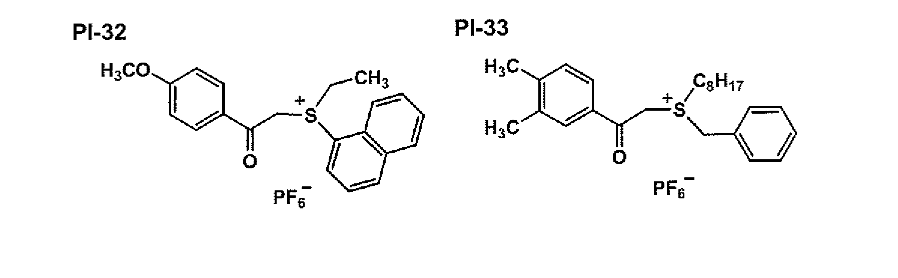

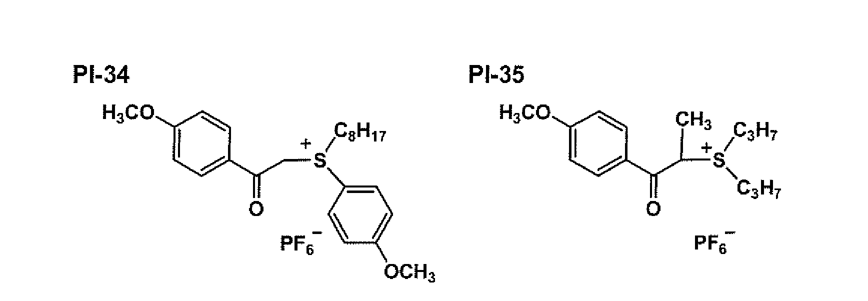

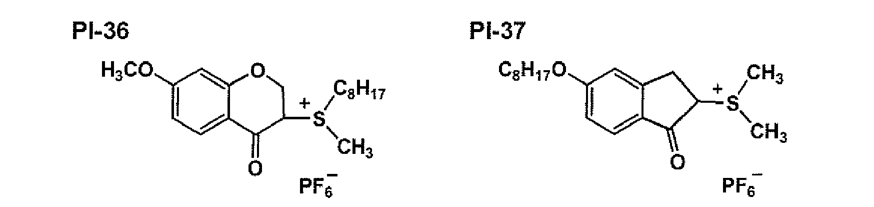

Photopolymerization accelerators include anthrathene, anthrathene derivatives (for example, Adekaoptomer SP-100, manufactured by Asahi Denka Industry Co., Ltd.), phenothiazine (10-phenothiazine), phenothiazine derivatives (for example, 10-methylphenothiazine, 10-ethylphenothiazine, 10-decylphenothiazine, 10-acetylphenothiazine, 10-decylphenothiazine-5-oxide, 10-decylphenothiazine-5,5-dioxide and 10-acetylphenothiazine-5,5-dioxide). These photopolymerization accelerators may be employed alone or as an admixture of two or more kinds thereof.

The actinic ray used in the invention is not specifically limited to the wavelength, but the ray has preferably an emission spectrum of from 200 to 1500 nm, and more preferably an emission spectrum in the UV regions. The ray has most preferably a maximum emission wavelength in the range of 250 to 370 nm, in view of sensitivity. Energy density of the actinic ray is not specifically limited as long as it can cure the actinic ray curable composition or ink, but is preferably from 1 to 30 W/cm². Electron beams can be also used as the actinic ray, and the electron beams are preferably which have energy of preferably not more than 300 eV.

Examples of a light source for the actinic ray irradiation include a mercury arc lamp, a xenon arc lamp, a fluorescent lamp, a carbon arc lamp, a tungsten-halogen lamp, a high pressure mercury lamp, a metal halide lamp, a nonelectrode UV lamp, a low pressure mercury lamp, a UV laser, a xenon flash lamp, an insect trap lamp, a black light, a germicidal lamp, a cold cathode tube, and an LED.

The content of the epoxy compound represented by formula (1-1), (1-2) or (2) in the actinic ray curable composition or actinic ray curable ink is preferably from 10 to 95 parts by weight, based on 100 parts by weight of the actinic ray curable composition or actinic ray curable ink. It is preferred in the invention that the actinic ray curable composition or actinic ray curable ink contains both an epoxy compound having only one oxirane ring and an epoxy compound having plural oxirane rings. The content ratio of the epoxy compound having only one oxirane ring to the epoxy compound having plural oxirane rings is preferably 95:5 to 30:70. The actinic ray curable composition or actinic ray curable ink preferably contains the oxetane compound, and the oxetane compound content in the actinic ray curable ink is preferably from 10 to 90 parts by weight, and more preferably from 50 to 70 parts by weight, based on 100 parts by weight of the actinic ray curable ink. The content of the photolytic acid generating agent in the actinic ray curable ink is preferably from 1 to 20 parts by weight, based on 100 parts by weight of the actinic ray curable ink.

Next, the actinic ray curable ink of the invention (hereinafter also referred to as the ink of the invention or to simply as the ink) will be explained in detail.

The ink of the invention contains pigment.

Preferred examples of the pigment are as follows:
C. I. Pigment Yellow-1, 3, 12, 13, 14, 17, 81, 83, 87, 95, 109 and 42
C. I. Pigment Orange-16, 36 and 38
C. I. Pigment Red-5, 22, 38, 48:1, 48:2, 48:4, 49:1, 53:1, 57:1, 63:1, 144, 146, 185 and 101
C. I. Pigment Violet-19 and 23
C. I. Pigment Blue-15:1, 15:3, 15:4, 18, 27, 29 and 60
C. I. Pigment Green-7 and 36
C. I. Pigment White-6, 18 and 21, and
C. I. Pigment Black-7

For dispersion of above pigments, employed may be such devices as a ball mill, an atleiter, a roll mill, an agitator, a Henchel Mixer, a colloidal mill, an ultrasonic homogenizer, a pearl mill, a wet type jet mill or a common paint shaker. A dispersant may also be added at the time of dispersion of the pigment. The dispersant is preferably a polymer dispersant, an example of which includes the Solsperese Series manufactured by Avecia Corp. Further, as a dispersion aid, utilized may be synergists corresponding to various types of pigments. These dispersant and dispersion aids are preferably added at 1 to 50 weight parts based on 100 weight parts of pigment. A solvent or a polymerization compound is utilized as a dispersion medium, however, presence of solvents in the actinic ray curable ink is undesirable, providing insufficient curing of ink immediately after ink deposition. When solvents remain in cured images, raised are problems of deterioration of solvent resistance and VOC of the residual solvent. Therefore, a dispersion medium, preferably a polymerization compound, and, in particular, preferable is to select a monomer having the lowest viscosity with respect to dispersion adaptability.

In dispersion of pigment, the average particle diameter of pigment particles is preferably 0.08 to 0.5 µm, and the maximum particle diameter is 0.3 to 10 µm and preferably 0.3 to 3 µm by selection of specific pigments, a dispersant and a dispersion medium, and suitable setting of dispersion and filtration conditions. By such particle size control, it is possible to reduce clogging of head nozzles, as well as to maintain storage stability, transparency and curing sensitivity of the ink.

The pigment content of the actinic ray curable ink of the invention is preferably from 1 to 10% by weight.

The actinic ray curable ink of the invention preferably contains a basic compound in improving storage stability.

As the basic compounds, various basic compounds known in the art can be used, which include a basic alkali metal compound, a basic alkaline earth metal compound, and an organic basic compound such as an amine.

Examples of the basic alkali metal compound include an alkali metal hydroxide such as lithium hydroxide, sodium hydroxide, or potassium hydroxide; an alkali metal carbonate such as lithium carbonate, sodium carbonate, or potassium carbonate; and an alkali metal alkoxide, such as sodium methoxide, sodium ethoxide, potassium methoxide, or potassium ethoxide.

Examples of the basic alkaline earth metal compound include an alkaline earth metal hydroxide such as magnesium hydroxide, or calcium hydroxide; an alkaline earth metal carbonate such as magnesium carbonate, or calcium carbonate; and an alkaline earth metal alkoxide such as magnesium methoxide.

As the organic basic compound, there is amine or a nitrogen-containing heterocyclic compound such as quinoline or isoquinoline. Of these, amine is preferred from viewpoints of miscibility with photopolymerizable monomers. Examples of the amine include octylamine, naphthylamine, xylenediamine, dibenzylamine, diphenylamine, dibutylamine, dioctylamine, dimethylaniline, quinacridine, tributylamine, trioctylamine, tetramethylethylenediamine, tetramethyl-1,6-hexamethylenediamine, hexamethylenetetramine, dimethylaminoethanol, dimethylamino-2-propanol, dimethylaminomethylpropanol, and triethanolamine.

The basic compound content of the actinic ray curable ink is preferably from 0.01 to 1% by weight in improving storage stability or curing speed.

The water content of the actinic ray curable ink of the invention is preferably from 1.50 to 5.00% by weight, in improving storage stability or curing speed. In the invention, the water content is determined by a Karl Fischer titration method.

In the invention, thermo-base generation agents can be used for the purpose of improving ejection stability or storage stability of ink.

As thermo-base generation agents, preferably used are, for example, salts of organic acids with bases which are decarboxylated in decomposition by heating, compounds which decompose to release amines by reactions such as intermolecular nucleophilic substitution, Lossen rearrangement or Beckmann rearrangement, and compounds causing some sort of reaction to release a base by heating. Specifically listed are salts of trichloroacetic acid described in British Patent 998,949, salts of alphasulfonylacetic acid described in US Patent 4,060,420, salts of propyl acids and derivatives of 2-carboxycarboxamide described in JP-A 59-157637, salts of thermal decomposition acids using alkaline metals and alkaline-earth metals other than organic bases as basic components described in JP-A 59-168440, hydroxamcarbamates using Lossen rearrangement described in JP-A 59-180537, and aldoxymecarbamates generating nitriles by heating described in JP-A 59-195237. In addition to these, useful are thermo base generation agents described in British Patent 998,945, US Patent 3,220,846, British Patent 279,480, JP-A Nos. 50-22625, 61-32844, 61-51139, 61-52638, 61-51140, 61-53634 through 61-53640, 61-55644, and 61-55645. Further examples of the thermo-base generation agents include guanidine trichloroacetate, methylguanidine trichloroacetate, potassium trichloroacetate, guanidine p-methanesulfonylphenylsulfonylacetate, guanidine p-chlorophenylsulfonylacetate, guanidine p-methanesulfonylphenylsulfonylacetate, potassium phenylpropyolate, guanidine phenylpropyolate, cesium phenylpropyolate, guanidine p-chlorophenylpropyolate, guanidine p-phenylene-bis-phenylpropylate, tetramethyl ammonium phenylsulfonylacetate, and tetramethyl ammonium phenylpropyolate. The thermo-base generation agents may be employed in the wide range.

The actinic ray curable ink of the invention can contain an acid increasing agent generating a new acid by an acid generated by irradiation of actinic rays, which is disclosed in Japanese Patent O.P.I. Publication Nos. 8-248561 and 9-34106.

The ink of the invention can be prepared by dispersing pigment, an actinic ray curable compound and a dispersant for pigment in a conventional disperser such as a sand mill. It is preferred that a solution containing a high concentration of pigment prepared in advance is diluted with an actinic ray curable compound. A conventional disperser can be used. Therefore, neither excessive dispersion energy nor much dispersion time is necessary, and ink with excellent stability is obtained without causing deterioration of the ink components. It is preferred that the dispersed ink composition is filtered with a filter with a pore diameter of not more than 3 µm, and then with a filter with a pore diameter of not more than 1 µm.

### (Viscosity and other physical properties)

The ink of the invention has a viscosity at 25 °C of preferably from 7 to 40 mPa·s. Ink having a viscosity at 25 °C of from 7 to 40 mPa·s is stably ejected not only from a recording head with a normal frequency of 4 to 10 KHz but also from a recording head with a high frequency of 10 to 50 KHz.

It is preferred that the ink of the invention used in a piezo type recording head be adjusted to an electroconductivity of not more than 10 µS/cm so that the inside of the head is not corroded by ink the composition. It is preferred that the electroconductivity of the ink composition used in a continuous type recording head be adjusted by an electrolyte to not less than 0.5 mS/cm.

In the invention, the surface tension of the ink is preferably in the range of in obtaining stable ejection or an intended dot size. The surface tension less than 25 mN/m at 25 °C cannot obtain stable ink ejection, while the surface tension exceeding 40 mN/m at 25 °c cannot obtain an intended dot diameter. When the surface tension of the ink falls outside the range of 25 to 40 mN/m at 25 °c, it is difficult to obtain a uniform dot diameter to various supports, even if the ink is ejected and cured while viscosity or moisture content of the ink is controlled.

In order to adjust the surface tension, if desired, surface active agents may be incorporated. Examples of surface active agents which are preferably employed in the present invention include anionic surface active agents such as dialkylsulfosuccinic acid salts, alkylnaphthalenesulfonic acid salts, and fatty acid salts; nonionic surface active agents such as polyoxyethylene alkyl ethers, polyoxyethylene alkyl allyl ethers, acetylene glycols, polyoxyethylene-polyoxypropylene block copolymers; cationic surface active agents such as alkylamine salts and quaternary ammonium salts; and surface active agents having a polymerizable group. Of these, specifically preferred are surface active agents having a polymerizable group such as an unsaturated bond, oxysilane, or an oxetane ring, for example, silicon modified acrylate, fluorine modified acrylate, silicon modified epoxide, fluorine modified epoxide, silicon modified oxetane, and fluorine modified oxetane.

The ink of the invention can contain other additives other than the above. These include a leveling additive agent, a mat agent, and polyester resin polyurethane resin, vinyl resin, acrylic resin, rubber resin, or wax for adjusting the film property. In order to improve the adhesion to the recording medium, it is also effective that a slight amount of an organic solvent is added. In this case, the addition within the range that the problem of the solvent resistance or VOC is not generated, is effective, and the amount is 0.1 to 5 weight %, preferably 0.1 to 3 weight % of total ink weight. It is possible to obtain a radical-cation polymerizable hybrid curable ink by using a radical polymerization monomer and an initiator in combination.

### Image formation method

### (Ink droplet volume, Actinic ray irradiation timing, Heating)

In the image formation method of the invention, the actinic ray curable ink is ejected onto a recording medium to form an ink image. Subsequently, the resulting ink image is exposed to actinic radiation (for example, ultraviolet radiation) to cure the ink image.

In the image forming method of the invention, it is preferable to decrease the viscosity of the ink by heating, during ink ejection, each of nozzles from which the ink is ejected. The heating temperature is commonly 30 to 80 °C, and preferably 35 to 60 °C.

In the invention, the thickness of an ink layer, after ink has been ejected onto a recording medium and cured by actinic ray irradiation, is preferably from 2 to 20 µm. In ink jet recording employing actinic ray curable ink, the total thickness of the ink on the recording medium is at present over 20 µm in the screen printing field. Excessive ink cannot be ejected onto the recording medium in the flexible package printing field where a thin plastic film is used as recording medium, because problems are caused in that stiffness and texture of printed matter vary, in addition to problems of the aforementioned curl and wrinkles of the recording medium. In the invention, a volume of the photocurable ink droplets ejected from nozzles is preferably 2 to 15 pl.

In the invention, it is preferred that actinic ray irradiation timing is as early as possible in order to form an image with high resolution. The actinic ray irradiation is preferably started at timing when the ink viscosity or moisture content is in a preferable state.

It is preferred that actinic ray is irradiated 0.001 to 2.0 seconds after ink has been ejected on recording medium, and it is more preferred that actinic ray is irradiated 0.001 to 1.0 second after ink has been ejected on recording medium. It is preferred that actinic ray irradiation has been carried out until ink fluidity is lost, and is completed in 0.1 to 3 seconds, preferably in 0.2 to 2 seconds. This can prevent undesired enlargement of dots or blurring of dots.

As an actinic ray irradiation method, a basic method is disclosed in JP-A No. 60-132767, in which light sources are provided at the both sides of a head unit where a head and a light are scanned in a shuttle mode. Irradiation is performed in a certain time interval after ink has been ejected onto recording medium. Further, curing is completed by another light source which is not driven. As a light irradiation method, a method utilizing optical fiber, and a method in which collimated light source is reflected by a mirror provided on the side surface of a head unit and UV light (ultraviolet light) is irradiated on a recording portion are disclosed in USP No. 6145979. In an image forming method of the invention, any of these irradiation methods can be utilized.

A printing image is recorded on a recording medium (hereinafter also referred to as a substrate) employing the ink of the invention. As materials for the recording medium, conventional synthetic resins widely used for various use can be used. Examples of the resins include polyester, polyethylene, polyurethane, polypropylene, acryl resin, polycarbonate, polystyrene, acrylonitrile-butadiene-styrene copolymer, polyethylene terephthalate, and polybutadiene terephthalate. Thickness or form of these resins is not specifically limited.

As the recording medium used in the invention, ordinary non-coated paper or coated paper, or non-absorptive recording sheets can be utilized. Among them, non-absorptive recording sheets are preferred.

As the non-absorptive recording sheets used in the invention, various non-absorptive plastic films can be used. Examples of the plastic films include, for example, a PET (polyethylene terephthalate) film, an OPS film, an OPP film, an ONy film, a PVC film, a PE film and a TAC film. Plastic films other than these, polycarbonate, acryl resin, ABS, polyacetal, PVA and a rubber series can be utilized. A metal series and a glass series are also applicable. The invention is effective especially in forming an image on a PET film, an OPS film, an OPP film, an ONy film or a PVC film, which are capable of thermal shrinking, among the above recording films. These films are liable to cause curl and deformation of film due to such as curing shrinkage of ink or heat accompanied with curing reaction of ink, and, in addition, the formed ink layer is hard to follow shrinkage of the films.

Plastic films greatly differ in surface energy depending on the kinds, and heretofore, there has been a problem in that the ink dot diameter after ink deposition on recording medium varies depending on the kinds of the recording mediums. The recording mediums used in the invention ranges from an OPP or OPS film each having a low surface energy to a PET film having a relatively high surface energy. In the invention, the recording mediums have a surface energy of preferably from 40 to 60 mN/m.

In the invention, a long length web recording medium is advantageously used in view of recording medium cost such as production cost and packaging cost, image recording efficiency, or adaptability to various sizes of prints.

A recording apparatus for forming an image used in the invention will be explained below.

The recording apparatus will be explained suitably in reference to a drawing. Herein, the recording apparatus of the drawing is only an embodiment of a recording apparatus of the invention, and a recording apparatus of the invention is not limited to the drawing.

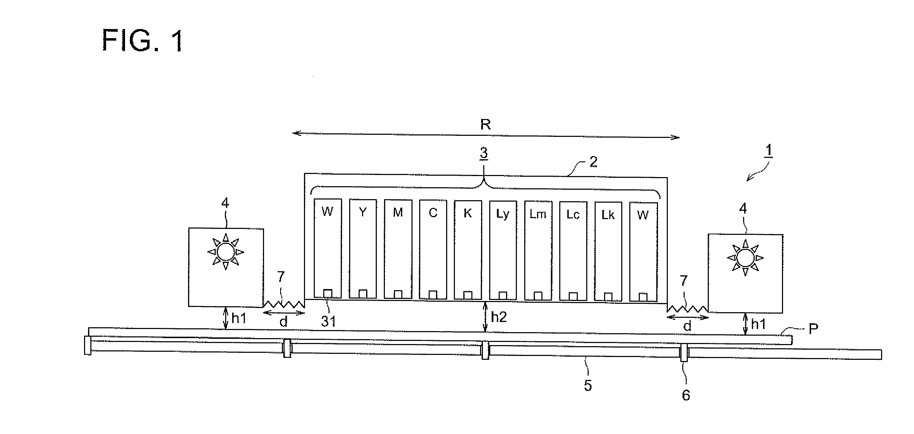

Fig. 1 shows a front view of one embodiment of the main section of the recording apparatus in the invention.

Recording apparatus 1 is equipped with head carriage 2, recording head 3, irradiation means 4 and platen portion 5. In recording apparatus 1, platen portion 5 is arranged under recording material P. Platen portion 5 has a UV ray absorbing function, and absorbs extra UV ray having passed through recording sheet P. As a result, images with high resolution can be reproduced quite stably.

Recording sheet P is guided by guide member 6 to be moved to the back side from the front side in Fig. 1 by operation of a transport means (not illustrated). Scan of recording heads 3 held in the head carriage 2 is made by reciprocating head carriage 2 in the R direction in Fig. 1 according to a head scanning means (not illustrated).

Head carriage 2 is provided over recording sheet P, and stores recording heads 3 described below with the ink ejection outlets arranged downward, the number of recording heads 3 being the same as that of different color inks used in an ink image formed on the recording sheet. Head carriage 2 is provided in the main body of recording apparatus 1 so as to reciprocate in the R direction shown in Fig. 1 by a drive of a head scanning means.

Herein, Fig. 1 illustrates that head carriage 2 is supposed to store recording heads 3 each containing a white ink W, a yellow ink Y, a magenta M, a cyan ink C, a black ink K, a light yellow ink Ly, a light magenta ink Lm, a light cyan ink Lc, a light black ink Lk and a white ink W, however, the number of recording heads 3 stored in head carriage 2 in practical operation is suitably determined.

Recording heads 3 eject an actinic ray curable ink (for example, UV curable ink) to be supplied by means of an ink supplying means (not illustrated) from the ink ejection outlets onto recording sheet P by action of plural ejecting means (not illustrated) equipped in the recording apparatus.

The recording heads 3 eject ink as ink droplets onto a pre-determined region (a region capable of receiving the ink) of recording sheet P while the scan of the head is made in which the head moves from one edge to another of the recording sheet in the R direction in Fig. 1 by drive of the head scanning means, whereby the ink is deposited on that region of the recording sheet.

The above scan is suitably made several times to eject the ink onto one region of recording sheet. After that, while the recording sheet P is transported from the front side to the back side of the page in Fig. 1 by a transport means and the scan of the recording heads 3 is again made by the head scan means, the ink is ejected from the recording heads onto a region adjacent to the one region of the recording sheet transported to the back side of the page.

The above operation is repeated, whereby the ink is ejected from recording heads 3 employing the head scan means and the transport means to form an image comprised of aggregates of ink droplets on recording sheet P.

Irradiation means 4 is equipped with a UV lamp which emits ultraviolet ray with a specific wavelength region at a stable exposure energy and a filter which transmits ultraviolet ray with a specific wavelength. Herein, examples of the UV lamp include a mercury lamp, a metal halide lamp, an excimer laser, a UV laser, a cold cathode tube, a black light, and an LED, and a metal halide lamp tube, a cold cathode tube, a mercury lamp tube and a black light, having a band-shape, are preferable. Specifically a cold cathode tube and a black light which emit a 365 nm ultraviolet ray are preferable, which can prevent bleeding-out, efficiently control a dot diameter, and reduce wrinkles on curing. Utilizing a black light as a radiation source of irradiation means 4 reduces a manufacturing cost of irradiation means 4 for curing the actinic curable ink.

Irradiation means 4 has the possible largest size which can be installed in the recording apparatus 1 (an ink jet printer) or the irradiation region of the irradiation means 4 is larger than the largest region of recording sheet, onto which the ink is ejected by one time scan of recording heads 3 driven by the head scanning means.

The irradiation means 4 is arranged nearly in parallel with recording sheet 4 at the both sides of head carriage 2, and fixed.

In order to adjust illuminance at the ink ejection outlets, the whole of recording heads 3 is light-shielded, however, in addition, it is preferable to make distance h2 between the ink ejection outlet 31 of recording heads 3 and recording sheet P longer than distance h1 between irradiation means 4 and recording sheet P (h1 < h2) or to make distance d between recording heads 3 and irradiation means 4 long (to make d large). Further, it is more preferable to provide bellows structure 7 between recording heads 3 and irradiation means 4.

Herein, the wavelength of ultraviolet rays, which are irradiated through irradiation means 4 can be suitably changed by exchange of a UV lamp or a filter, which is installed in irradiation means 4.

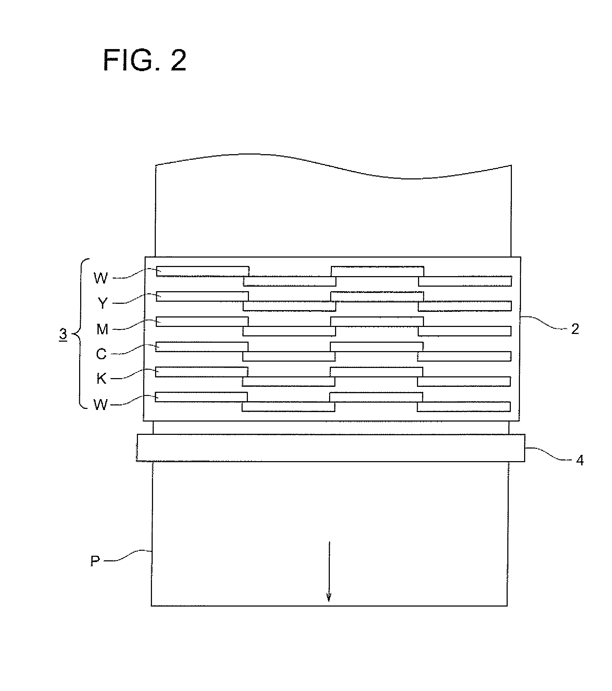

Fig. 2 shows a view of another embodiment of the main section of the ink-jet recording apparatus of the invention.

The ink-jet recording apparatus in Fig. 2 is called a line head type ink-jet recording apparatus. Recording heads 3 are provided in a head carriage 2 to cover the entire width of recording sheet P. The head carriage 2 is shielded from light.

The recording heads 3 each stores a different color ink, a white ink W, a yellow ink Y, a magenta ink M, a cyan ink C, a black ink K, and a white ink W.

Irradiation means 4 is provided just downstream of head carriage 2 to cover the entire width of recording sheet P and the entire printed surface. As a UV lamp in the irradiation means 4, the same as that described in Fig. 1 above can be used.

In the line head type recording apparatus, head carriage 2 and irradiation means 4 are fixed, and recording sheet P only is transported in the direction as shown in Fig. 2. Ink is ejected onto the recording sheet to be transported and then exposed through the irradiation means to form a cured image on the recording sheet.

### EXAMPLES

The invention will be explained employing the following examples, however, the embodiments of the invention are not limited thereto.

### Example 1

### (Preparation of ink)

The photopolymerizable compounds as shown in Tables 1 and 2 and 5 parts by weight of a dispersant PB822 (produced by Ajinomoto Fine Techno Co., Ltd.) were placed in a stainless steel beaker on a 60 °C hot plate, mixed and stirred for 1 hour while heating to 65 °C to obtain a mixture solution. Subsequently, 3 parts by weight of pigments were added to the resulting mixture solution. The resulting mixture was mixed with 100 parts by weight of zirconia beads with a diameter of 1 mm, placed in a plastic vessel, tightly sealed, and dispersed for 2 hours employing a paint shaker. After that, the zirconia beads were removed to obtain a dispersion. Thereafter, the resulting dispersion was added with the photoinitiator (photolytic acid generating agent), basic compound, and surfactant as shown in Tables 1 and 2, and filtered with a membrane filter with 0.8 µm pores. Thus, ink samples were obtained.

Compounds used are as follows:

### <Epoxy compound 1>

### Comparative compound

Celloxide 2021P produced by Daicel Kagaku Co., Ltd. Celloxide 3000 produced by Daicel Kagaku Co., Ltd.

Epoxy compound of formula (1-1) in the invention
(1): Bicyclohexyl-3,3'-diepoxide
(2): Bicyclohexyl-4,4'-dimethyl-3,3'-diepoxide
(3): Bicyclohexyl-3,3'-dimethyl-3,3'-diepoxide
(4): Bicyclohexyl-3,4'-dimethyl-3,3'-diepoxide

Epoxy compound of formula (1-2) in the invention

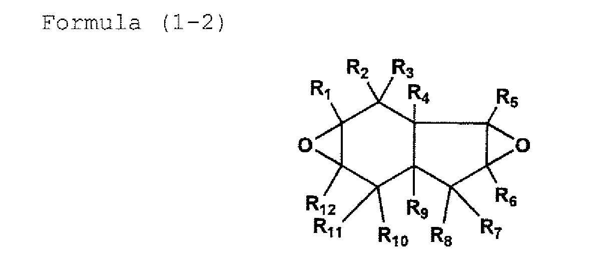

| | R₁ | R₅ | R₆ | R₁₂ | Other Rs |
|---|---|---|---|---|---|
| [1] | H | H | H | H | H |
| [2] | -CH₃ | -CH₃ | H | H | H |
| [3] | -CH₃ | H | -CH₃ | H | H |
| [4] | H | -CH₃ | H | -CH₃ | H |
| [5] | H | H | -CH₃ | -CH₃ | H |

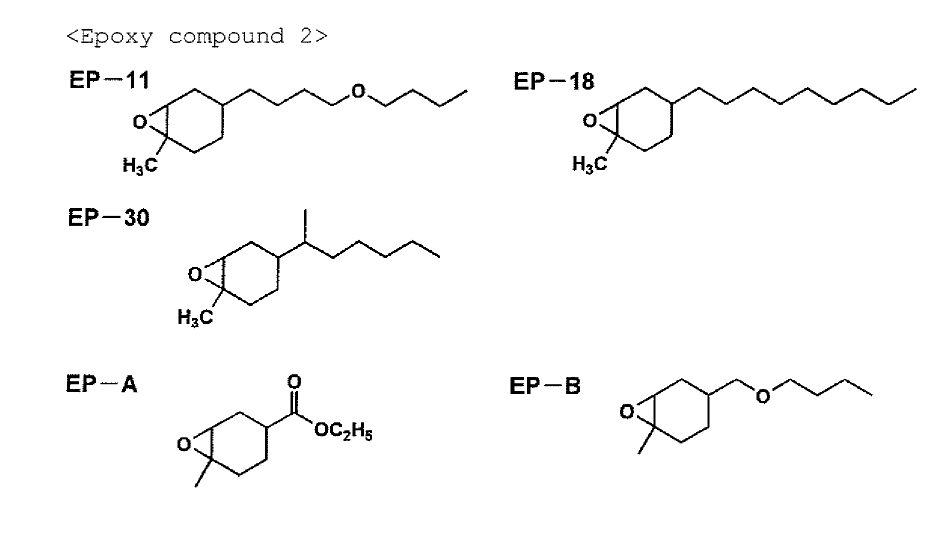

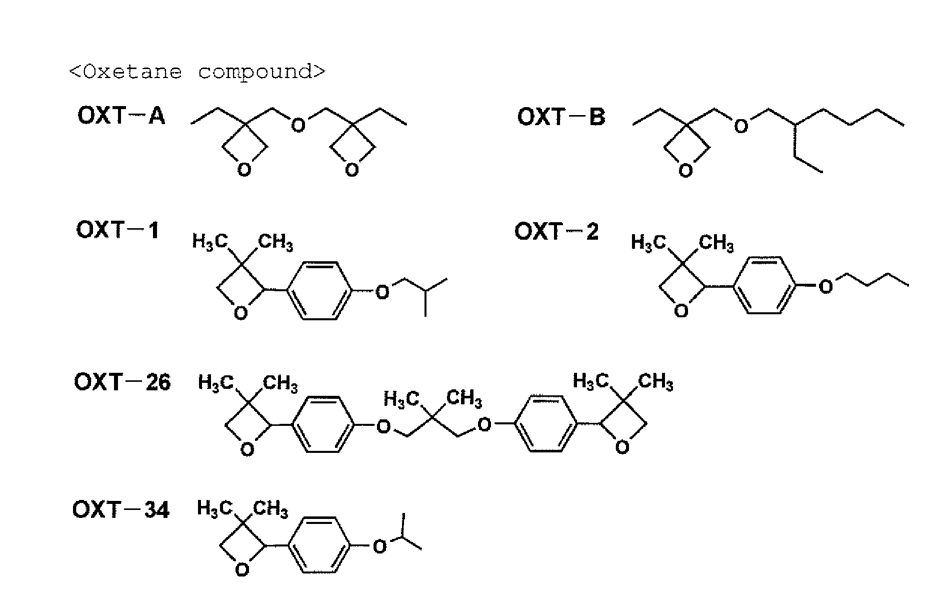

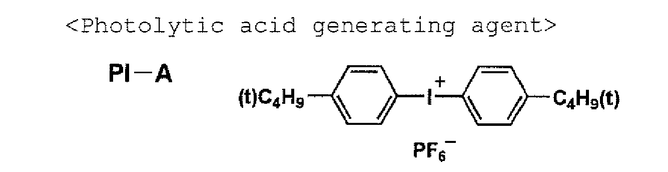

### <Basic compound>

TIPA: Triisopropanolamine

### <Surfactant>

F1405: Megafac F1405, perfluoroalkyl-containing ethylene oxide adduct (produced by DAINIPPON INK KAGAKU KOGYO CO., LTD.)

F178k: Megafac F178k, perfluoroalkyl-containing acryl oligomer (produced by DAINIPPON INK KAGAKU KOGYO CO., LTD.)

### <Solubilizing agent>

145P: Haritac 145P Rosin-modified maleic acid resin (produced by Harima Kagaku Kogyo Co., Ltd.)

R100: Haritac R100 Rosin-modified maleic acid resin (produced by Harima Kagaku Kogyo Co., Ltd.)

Pigments used are as follows:
- K:: CI pigment Black 7
- C:: CI pigment Blue 15:3
- M:: CI pigment Red 57:1
- Y:: CI pigment Yellow 13
- W:: Titanium oxide (anatase type particle diameter 0.2 µm)
- Lk:: CI pigment Black 7
- Lc:: CI pigment Blue 15:3
- Lm:: CI pigment Red 57:1
- Ly:: CI pigment Yellow 13

**Table 1**

| Sample No. | Epoxy compound 1 | Epoxy compound 2 | Oxetane compound | Photolytic acid generating agent | Basic compound | Surfactant | Solubilizing agent | Remarks |
|---|---|---|---|---|---|---|---|---|
| | Kinds *(parts) | Kinds (parts) | (parts) | Kinds (parts) | Kinds (parts) | (parts) Kinds (parts) | Kinds (parts) | |
| 1 | *A (30) | EP-A (20) | OXT-A (45) | PI-A (5) | *T (0.5) | F178K (0.5) | R100 (0.5) | Comp. |
| 2 | *B (30) | EP-B (20) | OXT-B (45) | PI-3 (5) | T (0.5) | F1405 (0.5) | R100 (0.5) | Comp. |
| 3 | (1) (30) | EP-B (20) | OXT-B (45) | PI-3 (5) | T (0.5) | F1405 (0.5) | R100 (0.5) | Inv. |
| 4 | (1) (35) | EP-11 (60) | None | PI-2 (5) | T (0.5) | F1405 (0.5) | 145P (0.5) | Inv. |
| 5 | (2) (35) | EP-18 (60) | None | PI-2 (5) | T (0.5) | F1405 (0.5) | 145P (0.5) | Inv. |
| 6 | (1) (50) | None | OXT-A (45) | PI-2 (5) | T (0.5) | F1405 (0.5) | 145P (0.5) | Inv. |
| 7 | (2) (50) | None | OXT-B (45) | PI-2 (5) | T (0.5) | F178K (0.5) | 145P (0.5) | Inv. |
| 8 | (1) (30) | EP-11 (20) | OXT-A (45) | PI-2 (5) | T (0.5) | F1405 (0.5) | 145P (0.5) | Inv. |
| 9 | (2) (30) | EP-18 (20) | OXT-B (45) | PI-2 (5) | T (0.5) | F178K (0.5) | 145P (0.5) | Inv. |
| 10 | (1) (30) | EP-11 (20) | OXT-A (45) | PI-A (5) | T (0.5) | F1405 (0.5) | 145P (0.5) | Inv. |
| 11 | (4) (30) | EP-30 (20) | OXT-A (45) | PI-9 (5) | T (0.5) | F1405 (0.5) | 145P (0.5) | Inv. |
| 12 | (1) (30) | EP-11 (20) | OXT-1 (45) | PI-11 (5) | T (0.5) | F1405 (0.5) | 145P (0.5) | Inv. |
| 13 | (2) (30) | EP-18 (20) | OXT-2 (45) | PI-2 (5) | T (0.5) | F178K (0.5) | R100 (0.5) | Inv. |
| 14 | (1) (30) | EP-11 (20) | OXT-2 (45) | PI-17 (5) | T (0.5) | F178K (0.5) | R100 (0.5) | Inv. |
| 15 | (1) (30) | EP-11 (20) | OXT-26 (45) | PI-2 (5) | T (0.5) | F178K (0.5) | R100 (0.5) | Inv. |
| 16 | (1) (30) | EP-11 (20) | OXT-34 (45) | PI-29 (5) | T (0.5) | F178K (0.5) | 145P (0.5) | Inv. |
| 17 | (3) (30) | EP-18 (20) | OXT-B (45) | PI-2 (5) | T (0.5) | F178K (0.5) | 145P (0.5) | Inv. |

| | | | | | | | | |
|---|---|---|---|---|---|---|---|---|
| Comp.: Comparative, Inv.: Inventive *"parts" shows "parts by weight", unless otherwise specified. *A: Celloxide 2021P *B: Celloxide 3000 *T: TIPA (triisopropanolamine) | | | | | | | | |

**Table 2**

| Sample No. | Epoxy compound 1 | Epoxy compound 2 | Oxetane compound | Photolytic acid generating agent | Basic compound | Surfactant | Solubilizing agent | Remarks |
|---|---|---|---|---|---|---|---|---|
| | Kinds * (parts) | Kinds (parts) | Kinds (parts) | Kinds (parts) | Kinds (parts) | Kinds (parts) | Kinds (parts) | |
| 1 | *A (30) | EP-A (20) | OXT-A (45) | PT-A (5) | *T (0.5) | F178K (0.5) | R100 (0.5) | Comp. |
| 2 | *B (30) | EP-B (20) | OXT-B (45) | PI-3 (5) | T (0.5) | F1405 (0.5) | R100 (0.5) | Comp. |
| 3 | [1] (30) | EP-B (20) | OXT-B (45) | PI-3 (5) | T (0.5) | F1405 (0.5) | R100 (0.5) | Inv. |
| 4 | [1] (35) | EP-11 (60) | None | PI-2 (5) | T (0.5) | F1405 (0.5) | 145P (0.5) | Inv. |
| 5 | [2] (35) | EP-18 (60) | None | PI-2 (5) | T (0.5) | F1405 (0.5) | 145P (0.5) | Inv. |
| 6 | [1] (50) | None | OXT-A (45) | PI-2 (5) | T (0.5) | F1405 (0.5) | 145P (0.5) | Inv. |
| 7 | [2] (50) | None | OXT-B (45) | PI-2 (5) | T (0.5) | F178K (0.5) | 145P (0.5) | Inv. |
| 8 | [1] (30) | EP-11 (20) | OXT-A (45) | PI-2 (5) | T (0.5) | F1405 (0.5) | 145P (0.5) | Inv. |
| 9 | [2] (30) | EP-18 (20) | OXT-B (45) | PI-2 (5) | T (0.5) | F178K (0.5) | 145P (0.5) | Inv. |
| 10 | [1] (30) | EP-11 (20) | OXT-A (45) | PI-A (5) | T (0.5) | F1405 (0.5) | 145P (0.5) | Inv. |
| 11 | [4] (30) | EP-30 (20) | OXT-A (45) | PI-9 (5) | T (0.5) | F1405 (0.5) | 145P (0.5) | Inv. |
| 12 | [5] (30) | EP-30 (20) | OXT-A (45) | PI-9 (5) | T (0.5) | F1405 (0.5) | 145P (0.5) | Inv. |
| 13 | [1] (30) | EP-11 (20) | OXT-1 (45) | PI-11 (5) | T (0.5) | F1405 (0.5) | 145P (0.5) | Inv. |
| 14 | [2] (30) | EP-18 (20) | OXT-2 (45) | PI-2 (5) | T (0.5) | F178K (0.5) | R100 (0.5) | Inv. |
| 15 | [1] (30) | EP-11 (20) | OXT-2 (45) | PI-17 (5) | T (0.5) | F178K (0.5) | R100 (0.5) | Inv. |
| 16 | [1] (30) | EP-11 (20) | OXT-26 (45) | PI-2 (5) | T (0.5) | F178K (0.5) | R100 (0.5) | Inv. |
| 17 | [1] (30) | EP-11 (20) | OXT-34 (45) | PI-29 (5) | T (0.5) | F178K (0.5) | 145P (0.5) | Inv. |
| 18 | [3] (30) | EP-18 (20) | OXT-8 (45) | PI-2 (5) | T (0.5) | F178K (0.5) | 145P (0.5) | Inv. |

| | | | | | | | | |
|---|---|---|---|---|---|---|---|---|
| Comp.: Comparative, Inv.: Inventive *"parts" shows "parts by weight", unless otherwise specified. *A : Celloxide 2021P *B: Celloxide 3000 *T: TIPA (Triisopropanolamine) | | | | | | | | |

### (Ink jet image formation method)

The above obtained ink sample was placed in the ink tank of an ink jet recording apparatus with piezo type ink jet nozzles having a structure as shown in Fig. 1, and an image was continuously recorded on a long length recording material with a width of 600 mm and a length of 20 m as described below:
The ink supply system was comprised of a piezo-head, a pre-ink tank arranged immediately upstream the head, an ink tank, an ink supply pipe and a pipe with a filter. The head and pre-ink tank were insulated, and heated to 50 °C. The ink head was heated according to the viscosity of each ink sample, and multi-size dot inks with a volume of 2 to 15 pl were continuously ejected and deposited on the recording material at a resolution of 720 x 720 dpi (herein, "dpi" means a dot number per 1 inch or 2.54 cm). The recording material was heated to 50 °C with an area heater. The ink deposited on the recording material was quickly cured (in less than 0.5 seconds after deposition), employing a light source, a high pressure mercury lamp Vzero 085 (produced by INTEGRATION TECHNOLOGY CO., LTD.) arranged on both sides of the carriage. Thus, an image was recorded onto the recording material to prepare a sample for evaluation. The above recording was carried out under condition of 30 °C and 80% RH, and under condition of 25 °C and 20% RH. The ink thickness of the recorded image was in the range of from 2.3 to 13 µm.

With respect to illuminance, integrated illuminance at 254 nm was measured employing UVPF-A1 produced by Iwasaki Denki Co., Ltd.

Recording materials used were as follows:
Synthetic paper: YUPO FGS (produced by YUPO CORPORATION)
PVC: Polyvinyl chloride

### (Measurement of viscosity)

Viscosity at 25 °C of the ink sample was measured at a shearing speed of 1000 1/s.

### (Evaluation of ink ejection property)

After the ink was continuously ejected for 30 minutes, ink gaps (deficiencies) were visually observed, and evaluated according to the following criteria.
A: No ink gaps were observed, providing good results.
B: Slight ink gaps were observed, but not problematic.
C: Ink gaps were observed, which was level affecting image quality.
D: Many ink gaps were observed, which was impermissible level.

### (Evaluation of recorded images)

In the resulting recorded image, character quality and image blurring were evaluated.

### (Character quality)

Six-point MS Mincho font characters were recorded at an aimed density, and the resulting characters were evaluated for roughness through a magnifying glass according to the following criteria.
A: No roughness was observed.
B: Slight roughness was observed.
C: Roughness was observed, however, the resulting characters were legible, which was the lowest usable level.
D: Significant roughness was observed, and the resulting characters were scratchy, which could not be put into practical use.

### Color Contamination (Bleeding-out or crease))

One dot of each of inks Y, M, C and K was recorded at 720 dpi to be adjacent to each other, and the resulting two adjacent dots were evaluated for color contamination (bleeding-out or crease) through a magnifying glass according to the following criteria.
A: The shapes of the two adjacent dots kept a true circle, and no bleeding-out was observed.
B: The shapes of the two adjacent dots kept a nearly true circle, and little bleeding-out was observed.
C: The two adjacent dots showed a little bleeding-out, and the dot shapes were slightly deformed, however, which was the lowest usable level.
D: The two adjacent dots showed bleeding-out and were contaminated with each, which could not be put into practical use.

### (Evaluation of cured layer)

Employing cyan ink containing dispersed cyan pigment, an image was recorded according to the above image recording method to prepare a cured ink layer, and the resulting cured layer was evaluated according to the following methods.
(1) Pencil scratching test
   Hardness of the resulting layer was measured according to JIS K 5400. A pencil scratch tester according to JIS K 5400 was employed, where a pencil MITSU-BISHI UNI having a pencil hardness range from 5B to 5H was employed and a load of 1000 g was applied. The cured layer was scratched with a pair of pencils having the nearest hardness, and the pair providing not less than two scratches and less than two scratches was determined. Hardness of the pencil providing less than two scratches of the pair was defined as a pencil scratch value.
(2) Evaluation of flexibility
   Flexibility of the resulting cured layer was evaluated according to the flex resistance test of JIS K 5600.
(3) Cross-cut adhesion test
   The cured layer prepared above for the flex resistance test was subjected to cross-cut adhesion test.
   Adhesive tape SCOTCH #250 (produced by SUMITOMO 3M CO., LTD.) was adhered onto a sample obtained according to the cross-cut adhesion test of JIS K 5400, where the cured layer was tessellated to form cured layer tesserae, and a 2 kg roller was reciprocated one time while pressing the adhered tape. After that, the tape was quickly peeled from the sample, and the number of the remaining tesserae was counted and represented in terms of remaining rate (%).
(4) Evaluation of light fastness
   The above-prepared cured layer was exposed at a radiation luminance of 40 to 60 W/m² for 7 days at 40 °C and at 50%RH, employing a xenon weather meter (light source: a 300-400 nm xenon arc lamp) produced by Tsutsunaka Techno Co., Ltd. The distance between the cured layer and the light source was 20 cm. The resulting cured layer was evaluated for coloration and flex resistance as follows.

### <Coloration>

- 1:: No coloration was observed.
- 2:: Slight coloration was observed.
- 3:: Coloration was observed.
- 4:: Remarkable coloration was observed.
- 5:: More remarkable coloration was observed.

### <Flex resistance>

The resulting cured layer was evaluated according to the flex resistance test of JIS K 5600.

The results are shown in Tables 3 and 4.

**Table 3**

| Sample No. | Viscosity (mPa·s) | Ejection property | *1 | | *2 | | *3 | | *4 | | *5 | *6 | *7 | *8 | | Remarks |
|---|---|---|---|---|---|---|---|---|---|---|---|---|---|---|---|---|
| | | | *9 | *10 | *9 | *10 | *9 | *10 | *9 | *10 | *11 | φ: mm | % | *12 | *13 | |
| 1 | 45 | D | C | B | C | B | C | B | C | B | B | 10 | 65 | 4 | 10 | Comp. |
| 2 | 48 | D | C | B | C | B | C | B | C | B | B | 10 | 45 | 4 | 10 | Comp. |
| 3 | 15 | A | A | A | A | A | A | A | A | A | 3H | 1 | 89 | 2 | 2 | Inv. |
| 4 | 12 | B | A | B | A | B | A | A | A | A | 3H | 2 | 87 | 1 | 2 | Inv. |
| 5 | 14 | B | A | B | A | B | A | A | A | A | 4H | 2 | 87 | 1 | 3 | Inv. |
| 6 | 16 | A | A | A | A | A | A | A | A | A | 4H | 2 | 89 | 2 | 3 | Inv. |
| 7 | 13 | A | A | A | A | A | A | A | A | A | 4H | 2 | 88 | 2 | 3 | Inv. |
| 8 | 15 | A | A | A | A | A | A | A | A | A | 4H | 1 | 89 | 2 | 2 | Inv. |
| 9 | 12 | A | A | A | A | A | A | A | A | A | 4H | 1 | 88 | 2 | 2 | Inv. |
| 10 | 15 | A | A | A | A | A | A | A | A | A | 3H | 2 | 89 | 2 | 2 | Inv. |
| 11 | 13 | A | A | A | A | A | A | A | A | A | 2H | 2 | 80 | 1 | 2 | Inv. |
| 12 | 14 | A | A | A | A | A | A | A | A | A | 3H | 2 | 92 | 1 | 1 | Inv. |
| 13 | 12 | A | A | A | A | A | A | A | A | A | 2H | 1 | 90 | 1 | 1 | Inv. |
| 14 | 13 | A | A | A | A | A | A | A | A | A | 3H | 1 | 85 | 1 | 1 | Inv. |
| 15 | 15 | A | A | A | A | A | A | A | A | A | 3H | 1 | 87 | 1 | 2 | Inv. |
| 16 | 17 | A | A | A | A | A | A | A | A | A | 3H | 1 | 85 | 1 | 1 | Inv. |
| 17 | 12 | A | A | A | A | A | A | A | A | A | 4H | 1 | 88 | 2 | 2 | Inv. |

| | | | | | | | | | | | | | | | | |
|---|---|---|---|---|---|---|---|---|---|---|---|---|---|---|---|---|
| Comp.: Comparative, Inv.: Inventive, *1: PVC (30 °C, 80%RH), *2: YUPO FGS (30 °C, 80%RH), *3: PVC (25 °C, 20%RH), *4: YUPO FGS (25 °C, 20%RH), *5: Pencil scratch value, *6: Flexibility, *7: Remaining rate, *8: Light fastness, *9: Character quality, *10: Color contamination, *11: Pencil hardness, 12: Coloration, *13: Flex resistance | | | | | | | | | | | | | | | | |

**Table 4**

| Sample No. | Viscosity (mPa·s) | Ejection property | *1 | | *2 | | *3 | | *4 | | *5 | *6 | *7 | *8 | | Remarks |
|---|---|---|---|---|---|---|---|---|---|---|---|---|---|---|---|---|
| | | | *9 | *10 | *9 | *10 | *9 | *10 | *9 | *10 | *11 | φ : mm | % | *12 | *13 | |
| 1 | 45 | D | C | B | C | B | C | B | C | B | B | 10 | 65 | 4 | 10 | Comp. |
| 2 | 48 | D | C | B | C | B | C | B | C | B | B | 10 | 45 | 4 | 10 | Comp. |
| 3 | 15 | A | A | A | A | A | A | A | A | A | 3H | 1 | 89 | 2 | 2 | Inv. |
| 4 | 12 | B | A | B | A | B | A | A | A | A | 3H | 2 | 87 | 1 | 2 | Inv. |
| 5 | 14 | B | A | B | A | B | A | A | A | A | 4H | 2 | 87 | 1 | 3 | Inv. |
| 6 | 16 | A | A | A | A | A | A | A | A | A | 4H | 2 | 89 | 2 | 3 | Inv. |
| 7 | 13 | A | A | A | A | A | A | A | A | A | 4H | 2 | 88 | 2 | 3 | Inv. |
| 8 | 15 | A | A | A | A | A | A | A | A | A | 4H | 1 | 89 | 2 | 2 | Inv. |
| 9 | 12 | A | A | A | A | A | A | A | A | A | 4H | 1 | 88 | 2 | 2 | Inv. |
| 10 | 15 | A | A | A | A | A | A | A | A | A | 3H | 2 | 89 | 2 | 2 | Inv. |
| 11 | 13 | A | A | A | A | A | A | A | A | A | 2H | 2 | 80 | 1 | 2 | Inv. |
| 12 | 13 | A | A | A | A | A | A | A | A | A | 2H | 2 | 80 | 1 | 2 | Inv. |
| 13 | 14 | A | A | A | A | A | A | A | A | A | 3H | 2 | 92 | 1 | 1 | Inv. |
| 14 | 12 | A | A | A | A | A | A | A | A | A | 2H | 1 | 90 | 1 | 1 | Inv. |
| 15 | 13 | A | A | A | A | A | A | A | A | A | 3H | 1 | 85 | 1 | 1 | Inv. |
| 16 | 15 | A | A | A | A | A | A | A | A | A | 3H | 1 | 87 | 1 | 2 | Inv. |
| 17 | 17 | A | A | A | A | A | A | A | A | A | 3H | 1 | 85 | 1 | 1 | Inv. |
| 18 | 12 | A | A | A | A | A | A | A | A | A | 4H | 1 | 88 | 2 | 2 | Inv. |

| | | | | | | | | | | | | | | | | |
|---|---|---|---|---|---|---|---|---|---|---|---|---|---|---|---|---|
| Comp.: Comparative, Inv.: Inventive, *1: PVC (30 °C, 80%RH), *2: YUPO FGS (30 °C, 80%RH), *3: PVC (25 °C, 20%RH), *4: YUPO FGS (25 °C, 20%RH), *5: Pencil scratch value, *6: Flexibility, *7: Remaining rate, *8: Light fastness, *9: Character quality, *10: Color contamination, *11: Pencil hardness, 12: Coloration, *13: Flex resistance | | | | | | | | | | | | | | | | |

As is apparent from Tables 3 and 4, the inventive ink samples provide a low viscosity, excellent ink ejection property, and excellent curing property, and are not affected by processing environments. Further, the cured ink layer from the inventive ink samples provides good adhesion to recording material, high hardness, excellent flexibility and high light fastness.

### Example 2

### (Preparation of ink sample)

Ink samples as shown in Tables 5 and 6 were prepared in the same manner as in Example 1 above. The resulting ink samples was added with pure water and adjusted to obtain the water content as shown in Tables 5 and 6, the water content being determined by a Karl Fischer titration method. The resulting ink samples were tight-sealed in a moisture-proofing aluminum case, stored in a 70 °C thermostat for 7 days, and evaluated for storage stability.

**Table 5**

| Sam-ple No. | Epoxy compound 1 | Epoxy compound 2 | Oxetane compound | Photolytic acid generating agent | Basic compound | Surfactant | Solubilizing agent Kinds (parts) | Water content (weight %) |
|---|---|---|---|---|---|---|---|---|
| | Kinds *(parts) | Kinds (parts) | Kinds (parts) | Kinds (parts) | Kinds (parts) | Kinds (parts) | | |
| 1 | (1) (30) | EP-B (20) | OXT-A (45) | PI-2 (5) | None | F (0.5) | R (0.5) | 2.5 |
| 2 | (1) (30) | EP-B (20) | OXT-A (45) | PI-2 (5) | T (0.01) | F (0.5) | R (0.5) | 2.5 |
| 3 | (1) (30) | EP-B (20) | OXT-A (45) | PI-2 (5) | T (0.1) | F (0.5) | R (0.5) | 2.5 |
| 4 | (1) (30) | EP-B (20) | OXT-A (45) | PI-2 (5) | T (0.5) | F (0.5) | R (0.5) | 2.5 |
| 5 | (1) (30) | EP-B (20) | OXT-A (45) | PI-2 (5) | T (1.0) | F (0.5) | R (0.5) | 2.5 |
| 6 | (1) (30) | EP-B (20) | OXT-A (45) | PI-2 (5) | T (1.5) | F (0.5) | R (0.5) | 2.5 |
| 7 | (1) (30) | EP-B (20) | OXT-A (45) | PI-2 (5) | E (0.1) | F (0.5) | R (0.5) | 2.5 |
| 8 | (1) (30) | EP-B (20) | OXT-A (45) | PI-2 (5) | B (0.1) | F (0.5) | R (0.5) | 2.5 |
| 9 | (1) (30) | EP-B (20) | OXT-A (45) | PI-2 (5) | D (0.1) | F (0.5) | R (0.5) | 2.5 |
| 10 | (1) (30) | EP-B (20) | OXT-A (45) | PI-2 (5) | A (0.1) | F (0.5) | R (0.5) | 2.5 |
| 11 | (1) (30) | EP-B (20) | OXT-A (45) | PI-2 (5) | T (0.1) | F (0.5) | R (0.5) | 1.0 |
| 12 | (1) (30) | EP-B (20) | OXT-A (45) | PI-2 (5) | T (0.1) | F (0.5) | R (0.5) | 1.5 |
| 13 | (1) (30) | EP-B (20) | OXT-A (45) | PI-2 (5) | T (0.1) | F (0.5) | R (0.5) | 3.5 |
| 14 | (1) (30) | EP-B (20) | OXT-A (45) | PI-2 (5) | T (0.1) | F (0.5) | R (0.5) | 5.0 |
| 15 | (1) (50) | None | OXT-A (45) | PI-2 (5) | None | F (0.5) | P (0.5) | 2.5 |
| 16 | (1) (50) | None | OXT-A (45) | PI-2 (5) | T (0.01) | F (0.5) | P (0.5) | 2.5 |
| 17 | (1) (50) | None | OXT-A (45) | PI-2 (5) | T (0.1) | F (0.5) | P (0.5) | 2.5 |
| 18 | (1) (50) | None | OXT-A (45) | PI-2 (5) | T (0.5) | F (0.5) | P (0.5) | 2.5 |
| 19 | (1) (50) | None | OXT-A (45) | PI-2 (5) | T (1.0) | F (0.5) | P (0.5) | 2.5 |
| 20 | (1) (50) | None | OXT-A (45) | PI-2 (5) | T (1.5) | F (0.5) | P (0.5) | 2.5 |
| 21 | (1) (50) | None | OXT-A (45) | PI-2 (5) | E (0.1) | F (0.5) | P (0.5) | 2.5 |
| 22 | (1) (50) | None | OXT-A (45) | PI-2 (5) | B (0.1) | F (0.5) | P (0.5) | 2.5 |
| 23 | (1) (50) | None | OXT-A (45) | PI-2 (5) | D (0.1) | F (0.5) | P (0.5) | 2.5 |
| 24 | (1) (50) | None | OXT-A (45) | PI-2 (5) | A (0.1) | F (0.5) | P (0.5) | 2.5 |
| 25 | (1) (50) | None | OXT-A (45) | PI-2 (5) | T (0.1) | F (0.5) | P (0.5) | 1.0 |
| 26 | (1) (50) | None | OXT-A (45) | PI-2 (5) | T (0.1) | F (0.5) | P (0.5) | 1.5 |
| 27 | (1) (50) | None | OXT-A (45) | PI-2 (5) | T (0.1) | F (0.5) | P (0.5) | 3.5 |
| 28 | (1) (50) | None | OXT-A (45) | PI-2 (5) | T (0.1) | F (0.5) | P (0.5) | 5.0 |

| | | | | | | | | |
|---|---|---|---|---|---|---|---|---|
| *"parts" shows "parts by weight", unless otherwise specified. T: TIPA = triisopropanolamine; E: EDA = N-ethyldiethanolamine; B: BDA = N-n-butyldiethanolamine; D: DEHA = N, N' -diethylhydroxylamine; A: AEAE = 2-(2-aminoethylamino)ethanol; F: F1405; R: R100; P: 145P | | | | | | | | |

**Table 6**

| Sample No. | Epoxy compound 1 | Epoxy compound 2 | Oxetane compound | Photolytic acid generating agent | Basic compound | Surfactant | Solubilizing agent | Water content (weight %) |
|---|---|---|---|---|---|---|---|---|
| | Kinds *(parts) | Kinds (parts) | Kinds (parts) | Kinds (parts) | Kinds (parts) | Kinds (parts) | Kinds (parts) | |
| 1 | [1](30) | EP-B (20) | OXT-A (45) | PI-2 (5) | None | F (0.5) | R (0.5) | 2.5 |
| 2 | [1] (30) | EP-B (20) | OXT-A (45) | PI-2 (5) | T (0.01) | F (0.5) | R (0.5) | 2.5 |
| 3 | [1] (30) | EP-B (20) | OXT-A (45) | PI-2 (5) | T (0.1) | F (0.5) | R (0.5) | 2.5 |
| 4 | [1](30) | EP-B (20) | OXT-A (45) | PI-2 (5) | T (0.5) | F (0.5) | R (0.5) | 2.5 |
| 5 | [1] (30) | EP-B (20) | OXT-A (45) | PI-2 (5) | T (1.0) | F (0.5) | R (0.5) | 2.5 |
| 6 | [1](30) | EP-B (20) | OXT-A (45) | PI-2 (5) | T (1.5) | F (0.5) | R (0.5) | 2.5 |
| 7 | [1] (30) | EP-B (20) | OXT-A (45) | PI-2 (5) | E(0.1) | F (0.5) | R (0.5) | 2.5 |
| 8 | [1] (30) | EP-B (20) | OXT-A (45) | PI-2 (5) | B(0.1) | F (0.5) | R (0.5) | 2.5 |
| 9 | [1](30) | EP-B (20) | OXT-A (45) | PI-2 (5) | D(0.1) | F (0.5) | R (0.5) | 2.5 |
| 10 | [1] (30) | EP-B (20) | OXT-A (45) | PI-2 (5) | A(0.1) | F (0.5) | R (0.5) | 2.5 |
| 11 | [1] (30) | EP-B (20) | OXT-A (45) | PI-2 (5) | T(0.1) | F (0.5) | R (0.5) | 1.0 |
| 12 | [1] (30) | EP-B (20) | OXT-A (45) | PI-2 (5) | T(0.1) | F (0.5) | R (0.5) | 1.5 |
| 13 | [1] (30) | EP-B (20) | OXT-A (45) | PI-2 (5) | T(0.1) | F (0.5) | R (0.5) | 3.5 |
| 14 | [1] (30) | EP-B (20) | OXT-A (45) | PI-2 (5) | T(0.1) | F (0.5) | R (0.5) | 5.0 |
| 15 | [1](50) | None | OXT-A (45) | PI-2 (5) | None | F (0.5) | P (0.5) | 2.5 |
| 16 | [1] (50) | None | OXT-A (45) | PI-2 (5) | T(0.01) | F (0.5) | P (0.5) | 2.5 |
| 17 | [1] (50) | None | OXT-A (45) | PI-2 (5) | T(0.1) | F (0.5) | P (0.5) | 2.5 |
| 18 | [1](50) | None | OXT-A (45) | PI-2 (5) | T(0.5) | F (0.5) | P (0.5) | 2.5 |
| 19 | [1](50) | None | OXT-A (45) | PI-2 (5) | T(1.0) | F (0.5) | P (0.5) | 2.5 |
| 20 | [1] (50) | None | OXT-A (45) | PI-2 (5) | T(1.5) | F (0.5) | P (0.5) | 2.5 |
| 21 | [1] (50) | None | OXT-A (45) | PI-2 (5) | E(0.1) | F (0.5) | P (0.5) | 2.5 |
| 22 | [1] (50) | None | OXT-A (45) | PI-2 (5) | B(0.1) | F (0.5) | P (0.5) | 2.5 |
| 23 | [1](50) | None | OXT-A (45) | PI-2 (5) | D(0.1) | F (0.5) | P (0.5) | 2.5 |
| 24 | [1] (50) | None | OXT-A (45) | PI-2 (5) | A(0.1) | F (0.5) | P (0.5) | 2.5 |
| 25 | [1](50) | None | OXT-A (45) | PI-2 (5) | T(0.1) | F (0.5) | P (0.5) | 1.0 |
| 26 | [1] (50) | None | OXT-A (45) | PI-2 (5) | T(0.1) | F (0.5) | P (0.5) | 1.5 |
| 27 | [1] (50) | None | OXT-A (45) | PI-2 (5) | T(0.1) | F (0.5) | P (0.5) | 3.5 |
| 28 | [1] (50) | None | OXT-A (45) | PI-2 (5) | T(0.1) | F (0.5) | P (0.5) | 5.0 |

| | | | | | | | | |
|---|---|---|---|---|---|---|---|---|
| *"parts" snows "parts by weight", unless otherwise specified. T: TIPA = triisopropanolamine; E: EDA = N-ethyldiethanolamine; B: BDA = N-n-butyldiethanolamine; D: DEHA = N,N'-diethylhydroxylamine; A: AEAE = 2-(2-aminoethylamino)ethanol; F: F1405; R: R100; P: 145P | | | | | | | | |

### (Viscosity measurement)

Viscosity at 25 °C of ink samples before and after placed in the thermostat was measured at a shearing speed of 1000 1/s.

### (Evaluation of ink ejection property)

Ink ejection property of ink samples before and after placed in the thermostat was evaluated in the same manner as in Example 1 above.

### (Evaluation of cured layer)

Employing cyan ink containing dispersed cyan pigment, an image was recorded according to the above image recording method to prepare a cured ink layer, and the resulting cured layer was evaluated according to the following methods.
(1) Pencil scratching test

Hardness of the resulting layer was measured according to JIS K 5400.

The results are shown in Tables 7 and 8.

**Table 7**

| Sample No. | Ink Viscosity (mPa·s) | | Ejection property | | Pencil Scratch value (Pencil hardness) |
|---|---|---|---|---|---|
| | Before storage | After storage | Before storage | After storage | |
| 1 | 14 | 37 | A | C | 3H |
| 2 | 14 | 21 | A | B | 3H |
| 3 | 14 | 15 | A | A | 3H |
| 4 | 15 | 16 | A | A | 3H |
| 5 | 15 | 15 | A | A | 3H |
| 6 | 15 | 15 | A | A | 2H |
| 7 | 14 | 15 | A | A | 3H |
| 8 | 14 | 15 | A | A | 3H |
| 9 | 14 | 15 | A | A | 3H |
| 10 | 14 | 15 | A | A | 3H |
| 11 | 14 | 22 | A | B | 3H |
| 12 | 14 | 16 | A | A | 3H |
| 13 | 14 | 14 | A | A | 3H |
| 14 | 14 | 14 | A | A | 3H |
| 15 | 15 | 40 | A | C | 4H |
| 16 | 15 | 22 | A | B | 4H |
| 17 | 15 | 16 | A | A | 4H |
| 18 | 16 | 17 | A | A | 4H |
| 19 | 16 | 16 | A | A | 4H |
| 20 | 16 | 16 | A | A | 4H |
| 21 | 15 | 16 | A | A | 4H |
| 22 | 15 | 16 | A | A | 4H |
| 23 | 15 | 16 | A | A | 4H |
| 24 | 15 | 16 | A | A | 4H |
| 25 | 15 | 25 | A | B | 4H |
| 26 | 15 | 17 | A | A | 4H |
| 27 | 15 | 15 | A | A | 4H |
| 28 | 15 | 15 | A | A | 4H |

**Table 8**

| Sample No. | Ink Viscosity (mPa·s) | | Ejection property | | Pencil Scratch value (Pencil hardness) |
|---|---|---|---|---|---|
| | Before storage | After storage | Before storage | After storage | |
| 1 | 14 | 37 | A | C | 3H |
| 2 | 14 | 21 | A | B | 3H |
| 3 | 14 | 15 | A | A | 3H |
| 4 | 15 | 16 | A | A | 3H |
| 5 | 15 | 15 | A | A | 3H |
| 6 | 15 | 15 | A | A | 2H |
| 7 | 14 | 15 | A | A | 3H |
| 8 | 14 | 15 | A | A | 3H |
| 9 | 14 | 15 | A | A | 3H |
| 10 | 14 | 15 | A | A | 3H |
| 11 | 14 | 22 | A | B | 3H |
| 12 | 14 | 16 | A | A | 3H |
| 13 | 14 | 14 | A | A | 3H |
| 14 | 14 | 14 | A | A | 3H |
| 15 | 15 | 40 | A | C | 4H |
| 16 | 15 | 22 | A | B | 4H |
| 17 | 15 | 16 | A | A | 4H |
| 18 | 16 | 17 | A | A | 4H |
| 19 | 16 | 16 | A | A | 4H |
| 20 | 16 | 16 | A | A | 4H |
| 21 | 15 | 16 | A | A | 4H |
| 22 | 15 | 16 | A | A | 4H |
| 23 | 15 | 16 | A | A | 4H |
| 24 | 15 | 16 | A | A | 4H |
| 25 | 15 | 25 | A | B | 4H |
| 26 | 15 | 17 | A | A | 4H |
| 27 | 15 | 15 | A | A | 4H |
| 28 | 15 | 15 | A | A | 4H |

As is apparent from Tables 7 and 8 above, addition of the basic compound provides improved storage stability of the ink, and the water content of from 1.5 to 5.0 % by weight in the ink sample also improves storage stability of the ink.

### Example 3

### (Preparation of actinic ray curable composition)

The photopolymerizable compounds and photoinitiators (photolytic acid generating agents), as shown in Table 9, were mixed in an amount as shown in Table 9 to obtain actinic ray curable composition samples 3-1 through 3-14.

**Table 9**

| Sample No. | Epoxy compound 1 | Epoxy compound 2 | Oxetane compound | Photolytic acid generating agent | Remarks |
|---|---|---|---|---|---|
| | Kinds *(parts) | Kinds (parts) | Kinds (parts) | Kinds (parts) | |
| 21 | *A (30) | EP-A (20) | OXT-A (45) | PI-A (5) | Comp. |
| 22 | *B (30) | EP-B (20) | OXT-B (45) | PI-3 (5) | Comp. |
| 23 | (1) (30) | EP-B (20) | OXT-B (45) | PI-3 (5) | Inv. |
| 24 | (1) (35) | EP-11 (60) | None | PI-2 (5) | Inv. |
| 25 | (2) (35) | EP-18 (60) | None | PI-2 (5) | Inv. |
| 26 | (1) (30) | EP-11 (20) | OXT-A (45) | PI-2 (5) | Inv. |
| 27 | (2) (30) | EP-18 (20) | OXT-B (45) | PI-2 (5) | Inv. |
| 28 | (1) (30) | EP-11 (20) | OXT-A (45) | PI-A (5) | Inv. |
| 29 | (4) (30) | EP-30 (20) | OXT-A (45) | PI-9 (5) | Inv. |
| 30 | (1) (30) | EP-11 (20) | OXT-1 (45) | PI-11 (5) | Inv. |
| 31 | (2) (30) | EP-18 (20) | OXT-2 (45) | PI-2 (5) | Inv. |
| 32 | (1) (30) | EP-11 (20) | OXT-2 (45) | PI-17 (5) | Inv. |
| 33 | (1) (30) | EP-11 (20) | OXT-26 (45) | PI-2 (5) | Inv. |
| 34 | (1) (30) | EP-11 (20) | OXT-34 (45) | PI-29 (5) | Inv. |

| | | | | | |
|---|---|---|---|---|---|
| Comp.: Comparative, Inv.: Inventive *"parts" shows "parts by weight", unless otherwise specified. *A : Celloxide 2021P; *B: Celloxide 3000; *T : TIPA (Triisopropanolamine) | | | | | |

### (Evaluation of actinic ray curable composition sample)

The resulting actinic ray curable composition sample was coated on a synthetic paper YUPO FGS produced by YUPO CORPORATION to obtain a layer with a dry thickness of 3 µm, and exposed for not more than 1 second to ultraviolet light at energy of 800 mJ/cm² employing a metal halide lamp to obtain a cured layer.

### (Evaluation of cured layer)

Physical properties of the resulting cured layer were evaluated according to the following methods.
(1) Pencil scratching test
   Hardness of the resulting layer was measured according to JIS K 5400.
   A pencil scratch tester according to JIS K 5400 was employed, where a pencil MITSU-BISHI UNI having a pencil hardness range from 5B to 5H was employed and a load of 1000 g was applied. The cured layer was scratched with a pair of pencils having the nearest hardness, and the pair providing not less than two scratches and less than two scratches was determined. Hardness of the pencil providing less than two scratches of the pair was defined as a pencil scratch value.
(2) Cross-cut adhesion test
   The cured layer prepared above for the flex resistance test was subjected to cross-cut adhesion test.
   Adhesive tape SCOTCH #250 (produced by SUMITOMO 3M CO., LTD.) was adhered onto a sample obtained according to the cross-cut adhesion test of JIS K 5400, where the cured layer was tessellated to form cured layer tesserae, and a 2 kg roller was reciprocated one time while pressing the adhered tape. After that, the tape was quickly peeled from the sample, and the number of the remaining tesserae was counted and represented in terms of remaining rate (%).
(3) Evaluation of flexibility
   Flexibility of the resulting cured layer was evaluated according to the flex resistance test of JIS K 5600.
(4) Evaluation of light fastness
   The above-prepared cured layer was exposed at a radiation luminance of 40 to 60 W/m² for 7 days at 40 °C and at 50%RH, employing a xenon weather meter (light source: a 300-400 nm xenon arc lamp) produced by Tsutsunaka Techno Co., Ltd. The distance between the cured layer and the light source was 20 cm. The resulting cured layer was evaluated for coloration and flex resistance as follows.

### <Coloration>

1: No coloration was observed.
2: Slight coloration was observed.
3: Coloration was observed.
4: Remarkable coloration was observed.
5: More remarkable coloration was observed.

### <Flex resistance>

The resulting cured layer was evaluated according to the flex resistance test of JIS K 5600.

The results are shown in Table 10.

**Table 10**

| Sample No. | Pencil scratch value (Pencil hardness) | Remaining rate (% by weight) | Flexibility | Light fastness | | Remarks |
|---|---|---|---|---|---|---|
| | | | | Coloration | Flex resistance | |
| 1 | HB | 60 | 5 | 4 | 8 | Comp. |
| 2 | HB | 55 | 6 | 4 | 10 | Comp. |
| 3 | 3H | 89 | 1 | 1 | 2 | Inv. |
| 4 | 3H | 85 | 2 | 1 | 2 | Inv. |
| 5 | 3H | 85 | 2 | 1 | 2 | Inv. |
| 6 | 4H | 89 | 4 | 1 | 5 | Comp. |
| 7 | 4H | 88 | 4 | 1 | 5 | Comp. |
| 8 | 4H | 89 | 1 | 1 | 2 | Inv. |
| 9 | 4H | 88 | 1 | 1 | 2 | Inv. |
| 10 | 4H | 89 | 1 | 2 | 2 | Inv. |
| 11 | 2H | 80 | 2 | 1 | 2 | Inv. |
| 12 | 3H | 90 | 2 | 1 | 2 | Inv. |
| 13 | 3H | 92 | 1 | 1 | 1 | Inv. |
| 14 | 3H | 85 | 1 | 1 | 1 | Inv. |
| 15 | 4H | 85 | 1 | 1 | 2 | Inv. |
| 16 | 4H | 85 | 1 | 1 | 2 | Inv. |

| | | | | | | |
|---|---|---|---|---|---|---|
| Comp.: Comparative, Inv.: Inventive | | | | | | |

As is apparent from Table 10, the inventive samples provide good adhesion to the synthetic paper, high layer hardness, excellent flexibility and high light fastness.

### Example 4

### (Preparation of actinic ray curable composition)

The photopolymerizable compounds and photoinitiators (photolytic acid generating agents), as shown in Table 11, were mixed in an amount as shown in Table 11 to obtain actinic ray curable composition samples 4-1 through 4-14.

**Table 11**

| Sample No. | Epoxy compound 1 | Epoxy compound 2 | Oxetane compound | Photolytic acid generating agent | Remarks |
|---|---|---|---|---|---|
| | Kinds *(Parts) | Kinds (parts) | Kinds (parts) | Kinds (parts) | |
| 21 | *A (30) | EP-A (20) | OXT-A (45) | PI-A (5) | Comp. |
| 22 | *B (30) | EP-B (20) | OXT-B (45) | PI-3 (5) | Comp. |
| 23 | 3-1 (30) | EP-B (20) | OXT-B (45) | PI-3 (5) | Inv. |
| 24 | 3-1 (35) | EP-11 (60) | None | PI-2 (5) | Inv. |
| 25 | 3-2 (35) | EP-18 (60) | None | PI-2 (5) | Inv. |
| 26 | 3-1 (50) | None | OXT-A (45) | PI-2 (5) | Comp. |
| 27 | 3-2 (50) | None | OXT-B (45) | PI-2 (5) | Comp. |
| 28 | 3-1 (30) | EP-11 (20) | OXT-A (45) | PI-2 (5) | Inv. |
| 29 | 3-2 (30) | EP-18 (20) | OXT-B (45) | PI-2 (5) | Inv. |
| 30 | 3-1 (30) | EP-11 (20) | OXT-A (45) | PI-A (5) | Inv. |
| 31 | 3-4 (30) | EP-30 (20) | OXT-A (45) | PI-9 (5) | Inv. |
| 32 | 3-5 (30) | EP-30 (20) | OXT-A (45) | PI-9 (5) | Inv. |
| 33 | 3-1 (30) | EP-11 (20) | OXT-1 (45) | PI-11 (5) | Inv. |
| 34 | 3-2 (30) | EP-18 (20) | OXT-2 (45) | PI-2 (5) | Inv. |
| 35 | 3-1 (30) | EP-11 (20) | OXT -2 (45) | PI-17 (5) | Inv. |
| 36 | 3-1 (30) | EP-11 (20) | OXT-26 (45) | PI-2 (5) | Inv. |
| 37 | 3-1 (30) | EP-11 (20) | OXT-34 (45) | PI-29 (5) | Inv. |

| | | | | | |
|---|---|---|---|---|---|
| Comp.: Comparative, Inv.: Inventive *"parts" shows "parts by weight", unless otherwise specified. *A : Celloxide 2021P; *B: Celloxide 3000; *T: TIPA (Triisopropanolamine) | | | | | |

The resulting actinic ray curable composition sample was processed in the same manner as in Example 3 to obtain a cured layer, and physical properties of the resulting cured layer were evaluated in the same manner as in Example 3.

The results are shown in Table 12.

**Table 12**

| Sample No. | Pencil scratch value (Pencil hardness) | Remaining rate (% by weight | Flexibility | Light fastness | | Remarks |
|---|---|---|---|---|---|---|
| | | | | Coloration | Flex resistance | |
| 21 | HB | 60 | 5 | 4 | 8 | Comp. |
| 22 | HB | 55 | 6 | 4 | 10 | Comp. |
| 23 | 3H | 89 | 1 | 1 | 2 | Inv. |
| 24 | 3H | 85 | 2 | 1 | 2 | Inv. |
| 25 | 3H | 85 | 2 | 1 | 2 | Inv. |
| 26 | 4H | 89 | 4 | 1 | 5 | Comp. |
| 27 | 4H | 88 | 4 | 1 | 5 | Comp. |
| 28 | 4H | 89 | 1 | 1 | 2 | Inv. |
| 29 | 4H | 88 | 1 | 1 | 2 | Inv. |
| 30 | 4H | 89 | 1 | 2 | 2 | Inv. |
| 31 | 2H | 80 | 2 | 1 | 2 | Inv. |
| 32 | 2H | 80 | 2 | 1 | 2 | Inv. |
| 33 | 3H | 90 | 2 | 1 | 2 | Inv. |
| 34 | 3H | 92 | 1 | 1 | 1 | Inv. |
| 35 | 3H | 85 | 1 | 1 | 1 | Inv. |
| 36 | 4H | 85 | 1 | 1 | 2 | Inv. |
| 37 | 4H | 85 | 1 | 1 | 2 | Inv. |

| | | | | | | |
|---|---|---|---|---|---|---|
| Comp.: Comparative, Inv.: Inventive | | | | | | |

As is apparent from Table 12, the inventive samples provide good adhesion to the synthetic paper, high layer hardness, excellent flexibility and high light fastness.

### INDUSTRIAL APPLICATION

The present invention can provide an actinic ray curable composition and an actinic ray curable ink having low viscosity, high curing speed, curing property without being affected by environmental humidity and high storage stability; and providing a cured layer having good adhesion to recording materials, high hardness, high flexibility, and high light fastness.

## Claims

1. An actinic ray curable ink containing pigment, a photolytic acid generating agent and an epoxy compound represented by formula (1-1), 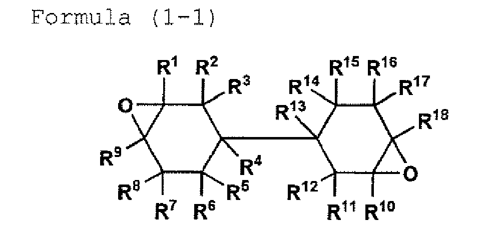 wherein R¹ through R¹⁸ independently represent a hydrogen atom, a halogen atom, a hydrocarbon group, a hydrocarbon group having a halogen atom or an oxygen atom, or a substituted or unsubstituted alkoxy group.

2. The actinic ray curable ink of claim 1, further containing an epoxy compound represented by formula (2), 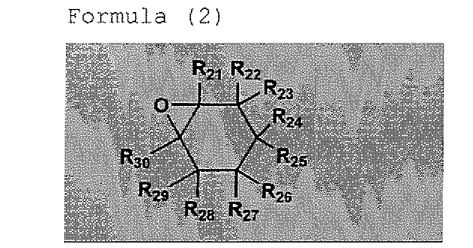 wherein R₂₁ through R₃₀ independently represent a hydrogen atom, a halogen atom, a hydrocarbon group, a hydrocarbon group having a halogen atom or an oxygen atom, or a substituted or unsubstituted alkoxy group.

3. The actinic ray curable ink of claim 1, wherein the epoxy compound is bicyclohexyl-3,3'-diepoxide, bicyclohexyl-3,3'-dimethyl-3,3'-diepoxide, bicyclohexyl-4,4'-dimethyl-3,3'-diepoxide, or bicyclohexyl-3,4'-dimethyl-3,3'-diepoxide.

4. The actinic ray curable ink of claim 1, wherein the photolytic acid generating agent is an onium salt.

5. The actinic ray curable ink of claim 4, wherein the onium salt is a sulfonium salt.

6. The actinic ray curable ink of claim 5, wherein the sulfonium salt is a compound represented by formula (I-1), 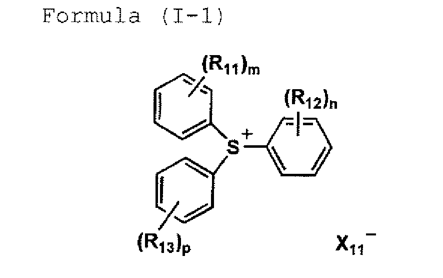 wherein R₁₁, R₁₂ and R₁₃ independently represent a substituent; m, n and p independently represent an integer of from 0 to 2; and X₁₁⁻ represents a counter anion.

7. The actinic ray curable ink of claim 1, further containing an oxetane compound.

8. The actinic ray curable ink of claim 1, further containing a basic compound.

9. The actinic ray curable ink of claim 1, wherein the ink has a viscosity at 25 °C of from 7 to 40 mPa·s.

10. The actinic ray curable ink of claim 1, wherein the ink has a water content of from 1.50 to 5.00% by weight, determined by a Karl Fischer titration method.

11. An actinic ray curable ink containing pigment, a photolytic acid generating agent and an epoxy compound represented by formula (1-2), 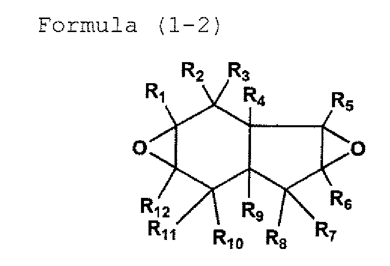 wherein R₁ through R₁₂ independently represent a hydrogen atom, a halogen atom, a hydrocarbon group, a hydrocarbon group having a halogen atom or an oxygen atom, or a substituted or unsubstituted alkoxy group.

12. The actinic ray curable ink of claim 11, further containing an epoxy compound represented by formula (2).

13. The actinic ray curable ink of claim 11, wherein all of R₁ through R₁₂ in formula (1-2) are simultaneously hydrogen atoms.

14. The actinic ray curable ink of claim 11, wherein in formula (1-2), either one of R₁ and R₁₂ is a methyl group, and either one of R₅ and R₆ is a methyl group.

15. The actinic ray curable ink of claim 14, wherein in formula (1-2), one of R₁ and R₁₂ is a methyl group and the other is a hydrogen atom, and one of R₅ and R₆ is a methyl group and the other is a hydrogen atom.

16. The actinic ray curable ink of claim 11, wherein the photolytic acid generating agent is an onium salt.

17. The actinic ray curable ink of claim 16, wherein the onium salt is a sulfonium salt.

18. The actinic ray curable ink of claim 17, wherein the sulfonium salt is a compound represented by formula (I-1).

19. The actinic ray curable ink of claim 11, further containing an oxetane compound.

20. The actinic ray curable ink of claim 11, further containing a basic compound.

21. The actinic ray curable ink of claim 11, wherein the ink has a viscosity at 25 °C of from 7 to 40 mPa·s.

22. The actinic ray curable ink of claim 11, wherein the ink has a water content of from 1.50 to 5.00% by weight, determined by a Karl Fischer titration method.

23. An actinic ray curable composition containing an epoxy compound represented by formula (1-1) and an epoxy compound represented by formula (2).

24. The actinic ray curable composition of claim 23, wherein the epoxy compound represented by formula (1-1) is bicyclohexyl-3,3'-diepoxide, bicyclohexyl-3,3'-dimethyl-3,3'-diepoxide, bicyclohexyl-4,4'-dimethyl-3,3'-diepoxide, or bicyclohexyl-3,4'-dimethyl-3,3'-diepoxide.

25. The actinic ray curable composition of claim 23, further containing a photolytic acid generating agent capable of generating an acid on light exposure.

26. The actinic ray curable composition of claim 25, wherein the photolytic acid generating agent is an onium salt.

27. The actinic ray curable composition of claim 26, wherein the onium salt is a sulfonium salt.

28. The actinic ray curable composition of claim 27, wherein the sulfonium salt is a compound represented by formula (I-1).

29. The actinic ray curable composition of claim 23, further containing an oxetane compound.

30. An actinic ray curable composition containing an epoxy compound represented by formula (1-2) and an epoxy compound represented by formula (2).

31. The actinic ray curable composition of claim 30, wherein all of R₁ through R₁₂ in formula (1-2) are simultaneously hydrogen atoms.

32. The actinic ray curable composition of claim 30, wherein in formula (1-2), either one of R₁ and R₁₂ is a methyl group, and either one of R₅ and R₆ is a methyl group.

33. The actinic ray curable composition of claim 32, wherein one of R₁ and R₁₂ is a methyl group and the other is a hydrogen atom, and one of R₅ and R₆ is a methyl group and the other is a hydrogen atom.

34. The actinic ray curable composition of claim 30, further containing a photolytic acid generating agent capable of generating an acid on light exposure.

35. The actinic ray curable composition of claim 34, wherein the photolytic acid generating agent is an onium salt.

36. The actinic ray curable composition of claim 35, wherein the onium salt is a sulfonium salt.

37. The actinic ray curable composition of claim 36, wherein the sulfonium salt is a compound represented by formula (I-1).

38. The actinic ray curable composition of claim 30, further containing an oxetane compound.

39. An image formation method comprising the steps of:
ejecting the actinic ray curable ink of claim 1 onto a recording medium to form an ink image; and
exposing to actinic radiation to cure the resulting ink image.

40. An image formation method comprising the steps of:
ejecting the actinic ray curable ink of claim 11 onto a recording medium to form an ink image; and
exposing to actinic radiation to cure the resulting ink image.
